# EUROPEAN PATENT APPLICATION

(11) **EP 3 598 693 A1**
(43) Date of publication of application: **22.01.2020**
(21) Application number: 17906028.0
(22) Date of filing: 17.04.2017
(51) Int. Cl.: H04L 9/32, H04L 29/08, H04L 29/06, H04W 12/06

(54) **METHOD FOR ACCESSING FIXED NETWORK AND ACCESS GATEWAY NETWORK ELEMENT**

(71) Applicant: Huawei Technologies Co., Ltd., Longgang District Shenzhen, Guangdong 518129 (CN)
(72) Inventor: LI, Huan, Shenzhen Guangdong 518129 (CN); LI, He, Shenzhen Guangdong 518129 (CN); JIN, Weisheng, Shenzhen Guangdong 518129 (CN)
(74) Representative: Isarpatent
(86) International application number: PCT/CN2017/080826
(87) International publication number: WO 2018/191854

(57) **Abstract**

This application discloses a method for accessing a fixed network and an access gateway network element, and relates to the communications field, to implement convergence of core network devices in a mobile network and a fixed network. The method for accessing a fixed network includes: performing, by an access gateway network element of a fixed network, a point-to-point protocol over Ethernet PPPoE negotiation with a terminal, to establish a PPPoE session with the terminal; negotiating, by the access gateway network element, a PPPoE authentication mode with the terminal; sending, by the access gateway network element, a PPPoE authentication parameter to an authentication service network element of a mobile network, where the PPPoE authentication parameter is used by the authentication service network element to perform PPPoE authentication on the terminal; and receiving, by the access gateway network element, a PPPoE authentication result from the authentication service network element, and sending a PPPoE authentication result message to the terminal, where the PPPoE authentication result message includes the PPPoE authentication result. Embodiments of this application are applied to authentication during an access from the mobile network to the fixed network.

## Description

### TECHNICAL FIELD

This application relates to the communications field, and in particular, to a method for accessing a fixed network and an access gateway network element.

### BACKGROUND

Convergence of a mobile network and a fixed network has always been a hot topic. In a research report about the 5th generation (5th Generation, 5G) in a 3rd generation partnership project (3rd Generation Partnership Project, 3GPP), it is clearly stated that a 5G core network defined in the 3GPP needs to support access of the fixed network.

Currently, in an evolved packet system (Evolved Packet System, EPS), unified policy and charging control is tried on a solution of interworking between a fixed network and a mobile network, and an extensible authentication protocol-authentication and key agreement (Extensible Authentication Protocol-Authentication and Key Agreement, EAP-AKA) authentication mode is used to authenticate user equipment (User Equipment, UE). In this way, the following problem is resolved: UE having a subscriber identity module (Subscriber Identity Module, SIM) card accesses the EPS system. However, an AAA server in the fixed network and an AAA server in the mobile network need to cooperate with each other in the authentication method, and consequently, convergence of core network devices in the mobile network and the fixed network cannot be implemented.

### SUMMARY

Embodiments of this application provide a method for accessing a fixed network and an access gateway network element, to implement convergence of core network devices in a mobile network and a fixed network.

To achieve the foregoing objective, the following technical solutions are used in the embodiments of this application.

According to a first aspect, a method for accessing a fixed network is provided, including: performing, by an access gateway network element of a fixed network, a point-to-point protocol over Ethernet PPPoE negotiation with a terminal, to establish a PPPoE session with the terminal; negotiating, by the access gateway network element, a PPPoE authentication mode with the terminal; sending, by the access gateway network element, a PPPoE authentication parameter to an authentication service network element of a mobile network, where the PPPoE authentication parameter is used by the authentication service network element to perform PPPoE authentication on the terminal; and receiving, by the access gateway network element, a PPPoE authentication result from the authentication service network element, and sending a PPPoE authentication result message to the terminal, where the PPPoE authentication result message includes the PPPoE authentication result. According to the method for accessing a fixed network provided in this embodiment of this application, after UE establishes a PPPoE session with an AGF, the AGF sends the PPPoE authentication parameter to an AUSF. The PPPoE authentication parameter is used by the AUSF to authenticate the UE. Then the AUSF feeds back the authentication result to the UE. In this way, convergence of core network devices in the mobile network and the fixed network is implemented.

In a possible design, the sending, by the access gateway network element, a PPPoE authentication parameter to an authentication service network element of a mobile network includes: sending, by the access gateway network element, an attach request message to an access and mobility management network element, where the attach request message includes the PPPoE authentication parameter, so that the access and mobility management network element sends the PPPoE authentication parameter to the authentication service network element by using an authentication request message; and the receiving, by the access gateway network element, a PPPoE authentication result from the authentication service network element includes: receiving, by the access gateway network element, an attach accept message from the access and mobility management network element, where the attach accept message includes the PPPoE authentication result, and the PPPoE authentication result is obtained by the access and mobility management network element from an authentication response message from the authentication service network element. In the design, a manner for carrying the PPPoE authentication parameter and the PPPoE authentication result is provided.

In a possible design, the attach request message and the authentication request message further include a fixed network access indication, and the fixed network access indication is used by the authentication service network element to determine to use a PPPoE authentication method; or the PPPoE authentication parameter is further used by the authentication service network element to determine to use the PPPoE authentication method. In the design, a manner in which the authentication service network element determines to use the PPPoE authentication method is provided.

In a possible design, before the receiving, by the access gateway network element, a PPPoE authentication result from the authentication service network element, the method further includes: receiving, by the access gateway network element, a security mode command SMC message from the access and mobility management network element; sending, by the access gateway network element, a first point-to-point protocol PPP message to the terminal, where the first PPP message includes the SMC message or a non-access stratum NAS encryption activation parameter; receiving, by the access gateway network element, a second PPP message from the terminal, where the second PPP message includes an SMC complete message or the NAS encryption activation parameter; and sending, by the access gateway network element, the SMC complete message or the NAS encryption activation parameter to the access and mobility management network element. In the design, a manner of an SMC process of NAS encryption and activation is provided.

In a possible design, the attach accept message further includes an SMC message, the authentication response message further includes the SMC message or a NAS encryption activation parameter, and the method further includes: receiving, by the access gateway network element, a first network control protocol NCP negotiation message from the terminal, where the first NCP negotiation message includes an SMC complete message or the NAS encryption activation parameter; and sending, by the access gateway network element, the SMC complete message to the access and mobility management network element. In the design, a manner of an SMC process of NAS encryption and activation is provided.

In a possible design, the method further includes: sending, by the access gateway network element, a second NCP negotiation message to the terminal, where the second NCP negotiation message includes a source Internet protocol IP address and a destination IP address that are used for transmission of a NAS message, or a source media access control MAC address and a destination MAC address that are used for transmission of the NAS message. In the design, the UE may interact with a 5G core network by using the NAS message in which the IP addresses or the MAC addresses are encapsulated.

In a possible design, the method further includes: receiving, by the access gateway network element, a third NCP negotiation message from the terminal; sending, by the access gateway network element, a packet data unit PDU session establishment request message to the access and mobility management network element, where the PDU session establishment request message includes a user identifier and/or a fixed network access identifier; receiving, by the access gateway network element, a session establishment response message from the access and mobility management network element, where the session establishment response message includes a quality of service QoS and/or charging policy and an IP address that is used for transmission of a user plane data packet, and the QoS and/or charging policy is obtained by a session management network element based on the user identifier and/or the fixed network access identifier; and sending, by the access gateway network element, a fourth NCP negotiation message to the terminal, where the fourth NCP negotiation message includes the IP address that is used for transmission of the user plane data packet. In the design, the UE may interact with a 5G core network by using the NAS message in which the IP addresses or MAC addresses are encapsulated. In addition, the access gateway network element may serve the terminal based on the QoS and/or charging policy.

In a possible design, the method further includes: receiving, by the access gateway network element, a fifth NCP negotiation message from the terminal, where the fifth NCP negotiation message includes an SMC request message; sending, by the access gateway network element, the SMC request message to the access and mobility management network element; receiving, by the access gateway network element, an SMC response message from the access and mobility management network element; and sending, by the access gateway network element, a sixth NCP negotiation message to the terminal, where the sixth NCP negotiation message includes the SMC response message. In the design, a manner of an SMC process of NAS encryption and activation is provided.

In a possible design, the sixth NCP negotiation message further includes a source IP address and a destination IP address that are used for transmission of a NAS message, or a source MAC address and a destination MAC address that are used for transmission of the NAS message. In the design, the UE may interact with a 5G core network by using the NAS message in which the IP addresses or the MAC addresses are encapsulated.

In a possible design, the method further includes: receiving, by the access gateway network element, a seventh NCP negotiation message from the terminal; sending, by the access gateway network element, an attach complete message to the access and mobility management network element; receiving, by the access gateway network element, an SMC message from the access and mobility management network element; sending, by the access gateway network element, an eighth NCP negotiation message to the terminal, where the eighth NCP negotiation message includes the SMC message; and receiving, by the access gateway network element, an SMC complete message from the terminal. In the design, a manner of an SMC process of NAS encryption and activation is provided.

In a possible design, the receiving, by the access gateway network element, an SMC complete message from the terminal includes: receiving, by the access gateway network element, a user uplink data packet from the terminal, where the user uplink data packet includes the SMC complete message; or receiving, by the access gateway network element, a ninth NCP negotiation message from the terminal, where the ninth NCP negotiation message includes the SMC complete message; or when the eighth NCP negotiation message includes a source IP address and a destination IP address that are used for transmission of a NAS message, or a source MAC address and a destination MAC address that are used for transmission of the NAS message, receiving, by the access gateway network element, the SMC complete message from the terminal, where the SMC complete message is transmitted by using the source IP address and the destination IP address that are used for transmission of the NAS message, or the source MAC address and the destination MAC address that are used for transmission of the NAS message. In the design, the UE may interact with a 5G core network by using the NAS message in which the IP addresses or the MAC addresses are encapsulated.

In a possible design, that the access gateway network element establishes and configures a link layer connection with the terminal to negotiate the authentication mode includes: receiving, by the access gateway network element, a link control protocol LCP negotiation message from the terminal, to determine to use a challenge handshake authentication protocol CHAP authentication process; generating, by the access gateway network element, a first random number; sending, by the access gateway network element, a challenge message to the terminal to initiate CHAP authentication, where the challenge request message includes the first random number; and receiving, by the access gateway network element, a challenge response message from the terminal, where the challenge response message includes a first authentication token, and the first authentication token is generated by the terminal based on the first random number and a first authentication parameter. The method further includes: sending, by the access gateway network element, the first random number and the first authentication token to the authentication service network element, where the first random number and the first authentication token are used by the authentication service network element to authenticate the terminal; receiving, by the access gateway network element, a second random number and a second authentication token from the authentication service network element, where the second authentication token is generated by the authentication service network element based on the first random number, the second random number, and a second authentication parameter; and sending, by the access gateway network element, the second random number and the second authentication token to the terminal, where the second random number and the second authentication token are used by the terminal to authenticate a network side. In the design, a manner in which the terminal and the network side authenticate each other is provided.

In a possible design, that the access gateway network element establishes and configures a link layer connection with the terminal to negotiate the authentication mode includes: receiving, by the access gateway network element, an LCP negotiation message from the terminal, to determine to use a CHAP authentication process, where the LCP negotiation message includes identity information of the terminal; sending, by the access gateway network element, an authentication information request message to a unified data management network element, where the authentication information request message includes the identity information of the terminal; receiving, by the access gateway network element, an authentication information response message from the authentication service network element, where the authentication information response message includes a third random number and a third authentication token, and the third random number and the third authentication token are generated by the unified data management network element based on the identity information of the terminal; sending, by the access gateway network element, a challenge request message to the terminal to initiate CHAP authentication, where the challenge request message includes the third random number and the third authentication token, and the third random number and the third authentication token are used by the terminal to authenticate a network side; and receiving, by the access gateway network element, a challenge response message from the terminal, where the challenge response message includes a fourth random number and a fourth authentication token, the fourth random number is generated by the terminal, and the fourth authentication token is generated by the terminal based on the third random number, the fourth random number, and a third authentication parameter. The method further includes: sending, by the access gateway network element, the fourth random number and the fourth authentication token to the authentication service network element, where the fourth random number and the fourth authentication token are used by the authentication service network element to authenticate the terminal. In the design, a manner in which the terminal and the network side authenticate each other is provided.

In a possible design, the access gateway network element includes one of the following: an independent network element in an access network of a fixed network, an access network of a fixed network, a broadband network gateway BNG/broadband remote access server BRAS. In the design, a specific implementation of the access gateway network element is provided.

According to a second aspect, an access gateway network element of a fixed network is provided, including: a negotiation unit, configured to perform a point-to-point protocol over Ethernet PPPoE negotiation with a terminal, to establish a PPPoE session with the terminal, where the negotiation unit is further configured to negotiate a PPPoE authentication mode with the terminal; a sending unit, configured to send a PPPoE authentication parameter to an authentication service network element of a mobile network, where the PPPoE authentication parameter is used by the authentication service network element to perform PPPoE authentication on the terminal; and a receiving unit, configured to: receive a PPPoE authentication result from the authentication service network element, and send a PPPoE authentication result message to the terminal, where the PPPoE authentication result message includes the PPPoE authentication result. Based on a same inventive concept, for a problem-resolving principle and beneficial effects of the apparatus, refer to the first aspect, the possible method implementations of the first aspect, and the beneficial effects. Therefore, for implementation of the apparatus, refer to the first aspect and the possible method implementations of the first aspect. No repeated description is provided.

According to a third aspect, an embodiment of this application provides an access gateway network element of a fixed network, including: a processor, a memory, a bus, and a communications interface. The memory is configured to store a computer execution instruction, and the processor is connected to the memory by using the bus. When the device runs, the processor executes the computer execution instruction stored in the memory, so that the device performs the method in any implementation of the foregoing first aspect. Based on a same inventive concept, the processor invokes the instruction stored in the memory to implement the solution in the method design of the first aspect. For problem-resolving implementations and beneficial effects of the device, refer to the first aspect, the possible method implementations of the first aspect, and the beneficial effects. Therefore, for implementation of the device, refer to the implementation of the foregoing method. No repeated description is provided again.

According to a fourth aspect, an embodiment of this application provides a computer storage medium including an instruction. When the instruction runs on a computer, the computer performs the method for accessing a fixed network according to the first aspect.

According to a fifth aspect, an embodiment of this application provides a computer program product including an instruction. When the instruction runs on a computer, the computer performs the method for accessing a fixed network according to the first aspect.

In addition, for a technical effect brought by any one of the design manners in the third aspect to the fifth aspect, refer to the technical effects brought by the different design manners in the first aspect. Details are not repeatedly described herein.

According to a sixth aspect, a method for accessing a fixed network is provided, including: performing, by a terminal, a point-to-point protocol over Ethernet PPPoE negotiation with an access gateway network element of a fixed network, to establish a PPPoE session with the access gateway network element; negotiating, by the terminal, a PPPoE authentication mode with the access gateway network element; and receiving, by the terminal, a PPPoE authentication result message from an authentication service network element of a mobile network, where the PPPoE authentication result message includes a PPPoE authentication result, the PPPoE authentication result is obtained by the authentication service network element based on a PPPoE authentication parameter from the access gateway network element, and the PPPoE authentication parameter is used by the authentication service network element to perform PPPoE authentication on the terminal. According to the method for accessing a fixed network provided in this embodiment of this application, after UE establishes a PPPoE session with an AGF, the AGF sends the PPPoE authentication parameter to an AUSF. The PPPoE authentication parameter is used by the AUSF to authenticate the UE. Then the AUSF feeds back the authentication result to the UE. In this way, convergence of core network devices in the mobile network and the fixed network is implemented.

In a possible design, the receiving, by the terminal, a PPPoE authentication result from an authentication service network element includes: receiving, by the terminal, the PPPoE authentication result from the access gateway network element, where the PPPoE authentication result is obtained by the access gateway network element from an attach accept message from an access and mobility management network element, and is obtained by the access and mobility management network element from an authentication response message from the authentication service network element. In the design, a manner for carrying the PPPoE authentication result is provided.

In a possible design, before the receiving, by the terminal, a PPPoE authentication result from an authentication service network element of a mobile network, the method further includes: receiving, by the terminal, a first point-to-point protocol PPP message from the access gateway network element, where the first PPP message includes a security mode command SMC message or a non-access stratum NAS encryption activation parameter, and the SMC message is from an access and mobility management network element; and sending, by the terminal, a second PPP message to the access gateway network element, where the second PPP message includes an SMC complete message or the NAS encryption activation parameter, so that the access gateway network element sends the SMC complete message or the NAS encryption activation parameter to the access and mobility management network element. In the design, a manner of an SMC process of NAS encryption and activation is provided.

In a possible design, the attach accept message further includes an SMC message, the PPPoE authentication result message further includes the SMC message or a NAS encryption activation parameter, and the method further includes: sending, by the terminal, a first network control protocol NCP negotiation message to the access gateway network element, where the first NCP negotiation message includes an SMC complete message or the NAS encryption activation parameter, so that the access gateway network element sends the SMC complete message to the access and mobility management network element. In the design, a manner of an SMC process of NAS encryption and activation is provided.

In a possible design, the method further includes: receiving, by the terminal, a second NCP negotiation message from the access gateway network element, where the second NCP negotiation message includes a source Internet protocol IP address and a destination IP address that are used for transmission of a NAS message, or a source media access control MAC address and a destination MAC address that are used for transmission of the NAS message.

In a possible design, the method further includes: sending, by the terminal, a third NCP negotiation message to the access gateway network element; and receiving, by the terminal, a fourth NCP negotiation message from the access gateway network element, where the fourth NCP negotiation message includes an IP address that is used for transmission of a user plane data packet, and the IP address that is used for transmission of the user plane data packet is obtained by the access gateway network element from a session establishment response message from the access and mobility management network element. In the design, the UE may interact with a 5G core network by using the NAS message in which IP addresses or MAC addresses are encapsulated.

In a possible design, the method further includes: sending, by the terminal, a fifth NCP negotiation message to the access gateway network element, where the fifth NCP negotiation message includes an SMC request message, so that the access gateway network element sends the SMC request message to the access and mobility management network element; and receiving, by the terminal, a sixth NCP negotiation message from the access gateway network element, where the sixth NCP negotiation message includes an SMC response message, and the SMC response message is from the access and mobility management network element. In the design, a manner of an SMC process of NAS encryption and activation is provided.

In a possible design, the sixth NCP negotiation message further includes a source IP address and a destination IP address that are used for transmission of a NAS message, or a MAC address and a destination MAC address that are used for transmission of the NAS message. In the design, the UE may interact with a 5G core network by using the NAS message in which the IP addresses or the MAC addresses are encapsulated.

In a possible design, the method further includes: sending, by the terminal, a seventh NCP negotiation message to the access gateway network element; receiving, by the terminal, an eighth NCP negotiation message from the access gateway network element, where the eighth NCP negotiation message includes an SMC message, and the SMC message is from the access and mobility management network element; and sending, by the terminal, an SMC complete message to the access gateway network element. In the design, a manner of an SMC process of NAS encryption and activation is provided.

In a possible design, the sending, by the terminal, an SMC complete message to the access gateway network element includes: sending, by the terminal, a user uplink data packet to the access gateway network element, where the user uplink data packet includes the SMC complete message; or sending, by the terminal, a received ninth NCP negotiation message to the access gateway network element, where the ninth NCP negotiation message includes the SMC complete message; or when the eighth NCP negotiation message includes a source IP address and a destination IP address that are used for transmission of a NAS message, or a source MAC address and a destination MAC address that are used for transmission of the NAS message, sending, by the terminal, the SMC complete message to the access gateway network element, where the SMC complete message is transmitted by using the source IP address and the destination IP address that are used for transmission of the NAS message, or the source MAC address and the destination MAC address that are used for transmission of the NAS message. In the design, the UE may interact with a 5G core network by using the NAS message in which the IP addresses or the MAC addresses are encapsulated.

In a possible design, the sending, by the terminal, an SMC complete message to the access gateway network element includes: sending, by the terminal, a link control protocol LCP negotiation message to the access gateway network element, to determine to use a challenge handshake authentication protocol CHAP authentication process; receiving, by the terminal, a challenge message from the access gateway network element, to initiate CHAP authentication, where the challenge request message includes a first random number; generating, by the terminal, a first authentication token based on the first random number and a first authentication parameter, where the first random number and the first authentication parameter are used by the authentication service network element to authenticate the terminal; and sending, by the terminal, a challenge response message to the access gateway network element, where the challenge response message includes the first authentication token. The method further includes: receiving, by the terminal, a second random number and a second authentication token from the access gateway network element, where the second authentication token is generated by the authentication service network element based on the first random number, the second random number, and a second authentication parameter; authenticating, by the terminal, a network side based on the second authentication token; and sending, by the terminal, the second random number and the second authentication token to the authentication service network element, where the second random number and the second authentication token are used by the authentication service network element to authenticate the terminal. In the design, a manner in which the terminal and the network side authenticate each other is provided.

In a possible design, the sending, by the terminal, an SMC complete message to the access gateway network element includes: sending, by the terminal, an LCP negotiation message to the access gateway network element, to determine to use a CHAP authentication process, where the LCP negotiation message includes identity information of the terminal; receiving, by the terminal, a challenge request message from the access gateway network element, to initiate CHAP authentication, where the challenge request message includes a third random number and a third authentication token, and the third random number and the third authentication token are generated by a unified data management network element based on the identity information of the terminal; authenticating, by the terminal, a network side based on the third random number and the third authentication token; generating, by the terminal, a fourth random number, and generating a fourth authentication token based on the third random number, the fourth random number, and a third authentication parameter; and sending, by the terminal, a challenge response message to the access gateway network element, where the challenge response message includes the fourth random number and the fourth authentication token, and the fourth random number and the fourth authentication token are used by the authentication service network element to authenticate the terminal. In the design, a manner in which the terminal and the network side authenticate each other is provided.

In a possible design, the access gateway network element includes one of the following: an independent network element in an access network of a fixed network, an access network of a fixed network, a broadband network gateway BNG/broadband remote access server BRAS. In the design, a specific implementation of the access gateway network element is provided.

According to a seventh aspect, a terminal is provided, including: a negotiation unit, configured to perform a point-to-point protocol over Ethernet PPPoE negotiation with an access gateway network element of a fixed network, to establish a PPPoE session with the access gateway network element, where the negotiation unit is further configured to negotiate a PPPoE authentication mode with the access gateway network element; and a receiving unit, configured to receive a PPPoE authentication result message from an authentication service network element of a mobile network, where the PPPoE authentication result message includes a PPPoE authentication result, the PPPoE authentication result is obtained by the authentication service network element based on a PPPoE authentication parameter from the access gateway network element, and the PPPoE authentication parameter is used by the authentication service network element to perform PPPoE authentication on the terminal. Based on a same inventive concept, for a problem-resolving principle and beneficial effects of the apparatus, refer to the sixth aspect, the possible method implementations of the sixth aspect, and the beneficial effects. Therefore, for implementation of the apparatus, refer to the sixth aspect and the possible method implementations of the sixth aspect. No repeated description is provided.

According to an eighth aspect, an embodiment of this application provides a terminal, including: a processor, a memory, a bus, and a communications interface. The memory is configured to store a computer execution instruction, and the processor is connected to the memory by using the bus. When the device runs, the processor executes the computer execution instruction stored in the memory, so that the device performs the method in any implementation of the foregoing sixth aspect. Based on a same inventive concept, the processor invokes the instruction stored in the memory to implement the solution in the method design of the sixth aspect. For problem-resolving implementations and beneficial effects of the device, refer to the sixth aspect, the possible method implementations of the sixth aspect, and the beneficial effects. Therefore, for implementation of the device, refer to the implementation of the foregoing method. No repeated description is provided again.

According to a ninth aspect, an embodiment of this application provides a computer storage medium including an instruction. When the instruction runs on a computer, the computer performs the method for accessing a fixed network according to the sixth aspect.

According to a tenth aspect, an embodiment of this application provides a computer program product including an instruction. When the instruction runs on a computer, the computer performs the method for accessing a fixed network according to the sixth aspect.

In addition, for a technical effect brought by any one of the design manners in the eighth aspect to the tenth aspect, refer to the technical effects brought by the different design manners in the sixth aspect. Details are not repeatedly described herein.

According to an eleventh aspect, a method for accessing a fixed network is provided, including: receiving, by an authentication service network element of a mobile network, a PPPoE authentication parameter from an access gateway network element of a fixed network; performing, by the authentication service network element, PPPoE authentication on a terminal based on the PPPoE authentication parameter; and sending, by the authentication service network element, a PPPoE authentication result to the terminal. According to the method for accessing a fixed network provided in this embodiment of this application, after UE establishes a PPPoE session with an AGF, the AGF sends the PPPoE authentication parameter to an AUSF, where the PPPoE authentication parameter is used by the AUSF to authenticate the UE. Then the AUSF feeds back the authentication result to the UE. In this way, convergence of core network devices in the mobile network and the fixed network is implemented.

In a possible design, the receiving, by an authentication service network element of a mobile network, a PPPoE authentication parameter from an access gateway network element of a fixed network includes: receiving, by the authentication service network element, an authentication request message from an access and mobility management network element, where the authentication request message includes the PPPoE authentication parameter, and the PPPoE authentication parameter is obtained by the access and mobility management network element from an attach request message from the access gateway network element; and the sending, by the authentication service network element, a PPPoE authentication result to the terminal includes: sending, by the authentication service network element, an authentication response message to the access and mobility management network element, where the authentication response message includes the PPPoE authentication result, so that the access and mobility management network element sends the PPPoE authentication result to the access gateway network element by using an attach accept message, and the access gateway network element sends the PPPoE authentication result to the terminal. In the design, a manner for carrying the PPPoE authentication parameter and the PPPoE authentication result is provided.

In a possible design, the attach request message and the authentication request message further include a fixed network access indication, and the fixed network access indication is used by the authentication service network element to determine to use a PPPoE authentication method; or the PPPoE authentication parameter is further used by the authentication service network element to determine to use the PPPoE authentication method. In the design, a manner in which the authentication service network element determines to use the PPPoE authentication method is provided.

In a possible design, the attach request message and the authentication request message include a first random number and a first authentication token, where the first authentication token is generated by the terminal based on the first random number and a first authentication parameter, and the first random number is generated by the access gateway network element. The method further includes: authenticating, by the authentication service network element, the terminal based on the first random number and the first authentication token; and generating, by the authentication service network element, a second authentication token based on the first random number, a second random number, and a second authentication parameter. The attach accept message and the authentication response message further include the second random number and the second authentication token, and the second random number and the second authentication token are used by the terminal to authenticate a network side. In the design, a manner in which the terminal and the network side authenticate each other is provided.

In a possible design, before the receiving, by an authentication service network element of a mobile network, a PPPoE authentication parameter from an access gateway network element of a fixed network, the method further includes: receiving, by the authentication service network element, a first authentication information response message from a unified data management network element, where the first authentication information response message includes a third random number, a third authentication token, and a key of the authentication service network element, and the third random number and the third authentication token are obtained by the unified data management network element based on identity information of the terminal; sending, by the authentication service network element, a second authentication information response message to the access gateway network element, where the second authentication information response message includes the third random number and the third authentication token so that the access gateway network element sends the third random number and the third authentication token to the terminal by using a challenge request message, the third random number and the third authentication token are used by the terminal to authenticate the network side, the authentication request message and the attach request message further include a fourth random number and a fourth authentication token, the fourth random number is generated by the terminal, and the fourth authentication token is generated by the terminal based on the third random number, the fourth random number, and a third authentication parameter; and authenticating, by the authentication service network element, the terminal based on the fourth random number and the fourth authentication token. In the design, a manner in which the terminal and the network side authenticate each other is provided.

In a possible design, the access gateway network element includes one of the following: an independent network element in an access network of a fixed network, an access network of a fixed network, a broadband network gateway BNG/broadband remote access server BRAS. In the design, a specific implementation of the access gateway network element is provided.

According to a twelfth aspect, an authentication service network element of a mobile network is provided, including: a receiving unit, configured to receive a PPPoE authentication parameter from an access gateway network element of a fixed network; an authentication unit, configured to perform PPPoE authentication on a terminal based on the PPPoE authentication parameter; and a sending unit, configured to send a PPPoE authentication result to the terminal. Based on a same inventive concept, for a problem-resolving principle and beneficial effects of the apparatus, refer to the eleventh aspect, the possible method implementations of the eleventh aspect, and the beneficial effects. Therefore, for implementation of the apparatus, refer to the eleventh aspect and the possible method implementations of the eleventh aspect. No repeated description is provided.

According to a thirteenth aspect, an embodiment of this application provides an authentication service network element of a mobile network, including: a processor, a memory, a bus, and a communications interface. The memory is configured to store a computer execution instruction, and the processor is connected to the memory by using the bus. When the device runs, the processor executes the computer execution instruction stored in the memory, so that the device performs the method in any implementation of the foregoing eleventh aspect. Based on a same inventive concept, the processor invokes the instruction stored in the memory to implement the solution in the method design of the eleventh aspect. For problem-resolving implementations and beneficial effects of the device, refer to the eleventh aspect, the possible implementations of the eleventh aspect, and the beneficial effects. Therefore, for implementation of the device, refer to the implementation of the foregoing method. No repeated description is provided again.

According to a fourteenth aspect, an embodiment of this application provides a computer storage medium including an instruction. When the instruction runs on a computer, the computer performs the method for accessing a fixed network according to the eleventh aspect.

According to a fifteenth aspect, an embodiment of this application provides a computer program product including an instruction. When the instruction runs on a computer, the computer performs the method for accessing a fixed network according to the eleventh aspect.

In addition, for a technical effect brought by any one of the design manners in the thirteenth aspect to the fifteenth aspect, refer to the technical effects brought by the different design manners in the eleventh aspect. Details are not repeatedly described herein.

According to a sixteenth aspect, a method for accessing a fixed network is provided, including: receiving, by an access and mobility management network element of a mobile network, a PPPoE authentication parameter from an access gateway network element of a fixed network, and sending the PPPoE authentication parameter to an authentication service network element of the mobile network, where the PPPoE authentication parameter is used by the authentication service network element to perform PPPoE authentication on a terminal; and receiving, by the access and mobility management network element, a PPPoE authentication result from the authentication service network element, and sending a PPPoE authentication result information message to the terminal. According to the method for accessing a fixed network provided in this embodiment of this application, after UE establishes a PPPoE session with an AGF, the AGF sends the PPPoE authentication parameter to an AUSF, where the PPPoE authentication parameter is used by the AUSF to authenticate the UE. Then the AUSF feeds back the authentication result to the UE. In this way, convergence of core network devices in the mobile network and the fixed network is implemented.

In a possible design, the receiving, by an access and mobility management network element of a mobile network, a PPPoE authentication parameter from an access gateway network element of a fixed network, and sending the PPPoE authentication parameter to an authentication service network element of the mobile network includes: receiving, by the access and mobility management network element, an attach request message from the access gateway network element, where the attach request message includes the PPPoE authentication parameter; and sending, by the access and mobility management network element, an authentication request message to the authentication service network element, where the authentication request message includes the PPPoE authentication parameter; and the receiving, by the access and mobility management network element, a PPPoE authentication result from the authentication service network element, and sending PPPoE authentication result information to the terminal includes: receiving, by the access and mobility management network element, an authentication response message from the authentication service network element, where the authentication response message includes the PPPoE authentication result; and sending, by the access and mobility management network element, an attach accept message to the access gateway network element, where the attach accept message includes the PPPoE authentication result, so that the access gateway network element sends the PPPoE authentication result to the terminal. In the design, a manner for carrying the PPPoE authentication parameter and the PPPoE authentication result is provided.

In a possible design, the attach request message and the authentication request message further include a fixed network access indication, and the fixed network access indication is used by the authentication service network element to determine to use a PPPoE authentication method; or the PPPoE authentication parameter is further used by the authentication service network element to determine to use the PPPoE authentication method. In the design, a manner in which the authentication service network element determines to use the PPPoE authentication method is provided.

In a possible design, before the sending, by the access and mobility management network element, the PPPoE authentication result to the terminal, the method further includes: sending, by the access and mobility management network element, a security mode command SMC message to the access gateway network element, so that the access gateway network element sends the SMC message or a non-access stratum NAS encryption activation parameter to the terminal by using a first point-to-point protocol PPP message; and receiving, by the access and mobility management network element, an SMC complete message or the NAS encryption activation parameter from the access gateway network element, where the SMC complete message or the NAS encryption activation parameter is obtained by the access and mobility management network element from a second PPP message from the terminal. In the design, a manner of an SMC process of NAS encryption and activation is provided.

In a possible design, the attach accept message further includes the SMC message, so that the access gateway network element sends the SMC message or the NAS encryption activation parameter to the terminal. The method further includes: receiving, by the access and mobility management network element, an SMC complete message from the access gateway network element, where the SMC complete message is obtained by the access gateway network element from a first network control protocol NCP negotiation message from the terminal, and the first NCP negotiation message includes the SMC complete message or the NAS encryption activation parameter. In the design, a manner of an SMC process of NAS encryption and activation is provided.

In a possible design, the method further includes: receiving, by the access and mobility management network element, a packet data unit PDU session establishment request message from the access gateway network element, where the PDU session establishment request message includes a user identifier and/or a fixed network access identifier; sending, by the access and mobility management network element, a PDU session establishment service request message to a session management network element, where the PDU session establishment service request message includes the user identifier and/or the fixed network access identifier; receiving, by the access and mobility management network element, a PDU session establishment service response message from the session management network element, where the PDU session establishment service response message includes a quality of service QoS and charging policy, and the QoS and charging policy is obtained by the session management network element based on the user identifier and/or the fixed network access identifier; and sending, by the access and mobility management network element, a session establishment response message to the access gateway network element, where the session establishment response message includes the QoS and charging policy and an IP address that is used for transmission of a user plane data packet, so that the access gateway network element sends, to the terminal by using a fourth NCP negotiation message, the IP address that is used for transmission of the user plane data packet. In the design, the UE may interact with a 5G core network by using the NAS message in which IP addresses or MAC addresses are encapsulated. In addition, the access gateway network element may serve the terminal based on the QoS and/or charging policy.

In a possible design, the method further includes: receiving, by the access and mobility management network element, an SMC request message from the access gateway network element, where the SMC request message is obtained by the access gateway network element from a fifth NCP negotiation message from the terminal; and sending, by the access and mobility management network element, an SMC response message to the access gateway network element, so that the access gateway network element sends the SMC response message to the terminal by using a sixth NCP negotiation message. In the design, a manner of an SMC process of NAS encryption and activation is provided.

In a possible design, the sixth NCP negotiation message further includes a source IP address and a destination IP address that are used for transmission of a NAS message. In the design, the UE may interact with a 5G core network by using the NAS message in which the IP addresses or MAC addresses are encapsulated.

In a possible design, the method further includes: receiving, by the access and mobility management network element, an attach complete message from the access gateway network element; and sending, by the access and mobility management network element, an SMC message to the access gateway network element, so that the access gateway network element sends the SMC message to the terminal by using an eighth NCP negotiation message, and the access gateway network element obtains the SMC complete message from a user uplink data packet from the terminal. In the design, a manner of an SMC process of NAS encryption and activation is provided.

In a possible design, the attach request message and the authentication request message further include a first random number and a first authentication token, the first random number and the first authentication token are used by the authentication service network element to authenticate the terminal, the first random number is generated by the access gateway network element, and the first authentication token is generated by the terminal based on the first random number and a first authentication parameter. The attach accept message and the authentication response message further include a second random number and a second authentication token, the second random number is generated by the authentication service network element, and the second authentication token is generated by the authentication service network element based on the first random number, the second random number, and a second authentication parameter. In the design, a manner in which the terminal and a network side authenticate each other is provided.

In a possible design, before the receiving, by an access and mobility management network element of a mobile network, a PPPoE authentication parameter from an access gateway network element of a fixed network, the method further includes: receiving, by the access and mobility management network element, an authentication information request message from the access gateway network element, and sending the authentication information request message to a unified data management network element, where the authentication information request message includes identity information of the terminal; receiving, by the access and mobility management network element, an authentication information response message from the authentication service network element, and sending the authentication information response message to the access gateway network element, where the authentication information response message includes a third random number and a third authentication token, and the third random number and the third authentication token are generated by the unified data management network element based on the identity information of the terminal and are used by the terminal to authenticate the network side; receiving, by the access and mobility management network element, a fourth random number and a fourth authentication token from the access gateway network element, where the fourth random number is generated by the terminal, and the fourth authentication token is generated by the terminal based on the third random number, the fourth random number, and a third authentication parameter; and sending, by the access and mobility management network element, the fourth random number and the fourth authentication token to the authentication service network element, where the fourth random number and the fourth authentication token are used by the authentication service network element to authenticate the terminal. In the design, a manner in which the terminal and the network side authenticate each other is provided.

In a possible design, the access gateway network element includes one of the following: an independent network element in an access network of a fixed network, an access network of a fixed network, a broadband network gateway BNG/broadband remote access server BRAS. In the design, a specific implementation of the access gateway network element is provided.

According to a seventeenth aspect, an access and mobility management network element of a mobile network is provided, including: a receiving unit, configured to receive a PPPoE authentication parameter from an access gateway network element of a fixed network; and a sending unit, configured to send the PPPoE authentication parameter to an authentication service network element of the mobile network, where the PPPoE authentication parameter is used by the authentication service network element to perform PPPoE authentication on a terminal. The receiving unit is further configured to receive a PPPoE authentication result from the authentication service network element, and the sending unit is further configured to send PPPoE authentication result information to the terminal. Based on a same inventive concept, for a problem-resolving principle and beneficial effects of the apparatus, refer to the sixteenth aspect, the possible method implementations of the sixteenth aspect, and the beneficial effects. Therefore, for implementation of the apparatus, refer to the sixteenth aspect and the possible method implementations of the sixteenth aspect. No repeated description is provided.

According to an eighteenth aspect, an embodiment of this application provides an access and mobility management network element of a mobile network, including: a processor, a memory, a bus, and a communications interface. The memory is configured to store a computer execution instruction, and the processor is connected to the memory by using the bus. When the device runs, the processor executes the computer execution instruction stored in the memory, so that the device performs the method in any implementation of the foregoing sixteenth aspect. Based on a same inventive concept, the processor invokes the instruction stored in the memory to implement the solution in the method design of the sixteenth aspect. For problem-resolving implementations and beneficial effects of the device, refer to the sixteenth aspect, the possible method implementations of the sixteenth aspect, and the beneficial effects. Therefore, for implementation of the device, refer to the implementation of the foregoing method. No repeated description is provided again.

According to a nineteenth aspect, an embodiment of this application provides a computer storage medium including an instruction. When the instruction runs on a computer, the computer performs the method for accessing a fixed network according to the sixteenth aspect.

According to a twentieth aspect, an embodiment of this application provides a computer program product including an instruction. When the instruction runs on a computer, the computer performs the method for accessing a fixed network according to the sixteenth aspect.

In addition, for a technical effect brought by any one of the design manners in the eighteenth aspect to the twentieth aspect, refer to the technical effects brought by the different design manners in the sixteenth aspect. Details are not repeatedly described herein.

According to a twenty-first aspect, a system for accessing a fixed network is provided, including: the access gateway network element of the fixed network in the second aspect, the terminal in the seventh aspect, the authentication service network element of the mobile network in the twelfth aspect, and the access and mobility management network element of the mobile network in the seventeenth aspect; or including: the access gateway network element of the fixed network in the third aspect, the terminal in the eighth aspect, the authentication service network element of the mobile network in the thirteenth aspect, and the access and mobility management network element of the mobile network in the eighteenth aspect. The authentication service network element receives a point-to-point protocol over Ethernet PPPoE authentication parameter from the access gateway network element of the fixed network through the access and mobility management network element. The authentication service network element performs PPPoE authentication on the terminal based on the PPPoE authentication parameter, and sends a PPPoE authentication result to the terminal by using the access and mobility management network element and the access gateway network element. Based on a same inventive concept, for a problem-resolving principle and beneficial effects of the system, refer to the beneficial effects, and the first aspect, the sixth aspect, the eleventh aspect, the sixteenth aspect, and the possible method implementations. Therefore, for implementation of the apparatus, refer to the first aspect, the sixth aspect, the eleventh aspect, the sixteenth aspect, and the possible method implementations. No repeated description is provided.

### BRIEF DESCRIPTION OF DRAWINGS

To describe the technical solutions in the embodiments of this application or in the prior art more clearly, the following briefly describes the accompanying drawings required for describing the embodiments or the prior art.
FIG. 1 is a schematic architectural diagram of a system for accessing a fixed network according to an embodiment of this application;
FIG. 2 is a schematic flowchart of a first method for accessing a fixed network according to an embodiment of this application;
FIG. 3 is a schematic flowchart of a second method for accessing a fixed network according to an embodiment of this application;
FIG. 4 is a schematic flowchart of a third method for accessing a fixed network according to an embodiment of this application;
FIG. 5 is a schematic flowchart of a fourth method for accessing a fixed network according to an embodiment of this application;
FIG. 6 is a schematic flowchart of a fifth method for accessing a fixed network according to an embodiment of this application;
FIG. 7 is a schematic flowchart of a sixth method for accessing a fixed network according to an embodiment of this application;
FIG. 8 is a schematic flowchart of a seventh method for accessing a fixed network according to an embodiment of this application;
FIG. 9 is a schematic flowchart of an eighth method for accessing a fixed network according to an embodiment of this application;
FIG. 10 is a schematic flowchart of a ninth method for accessing a fixed network according to an embodiment of this application;
FIG. 11 is a schematic structural diagram of hardware of a terminal according to an embodiment of this application;
FIG. 12 is a schematic structural diagram of hardware of another terminal according to an embodiment of this application;
FIG. 13 is a schematic structural diagram of hardware of still another terminal according to an embodiment of this application;
FIG. 14 is a schematic structural diagram of hardware of an access gateway network element according to an embodiment of this application;
FIG. 15 is a schematic structural diagram of hardware of another access gateway network element according to an embodiment of this application;
FIG. 16 is a schematic structural diagram of hardware of still another access gateway network element according to an embodiment of this application;
FIG. 17 is a schematic structural diagram of hardware of an access and mobility management network element according to an embodiment of this application;
FIG. 18 is a schematic structural diagram of hardware of another access and mobility management network element according to an embodiment of this application;
FIG. 19 is a schematic structural diagram of hardware of still another access and mobility management network element according to an embodiment of this application;
FIG. 20 is a schematic structural diagram of hardware of an authentication service network element according to an embodiment of this application;
FIG. 21 is a schematic structural diagram of hardware of another authentication service network element according to an embodiment of this application; and
FIG. 22 is a schematic structural diagram of hardware of still another authentication service network element according to an embodiment of this application.

### DESCRIPTION OF EMBODIMENTS

The following describes the embodiments of this application with reference to accompanying drawings.

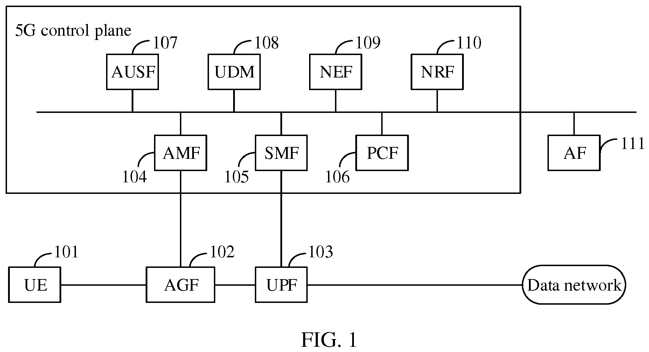

An embodiment of this application provides a system architecture for accessing a fixed network. Referring to FIG. 1, the system includes an access gateway network element, a user plane network element, an access and mobility management network element, a session management network element, a policy control network element, an authentication service network element, a normalized data management network element, a network exposure network element, a network response network element, and an application network element. In this application, the following example is used for description: The access gateway network element is an access gateway function (Access Gateway Function, AGF) 102, the user plane network element is a user plane function (User Plane Function, UPF) 103, the access and mobility management network element is an access and mobility management function (Access and Mobility Management Function, AMF) 104, the session management network element is a session management function (Session Management Function, SMF) 105, the policy control network element is a policy control function (Policy Control Function, PCF) 106, the authentication service network element is an authentication server function (Authentication Server Function, AUSF) 107, the normalized data management network element is unified data management (Unified Data Management, UDM) 108, the network exposure network element is a network exposure function (Network Exposure Function, NEF) 109, the network response network element is a network response function (Network Response Function, NRF) 110, and the application network element is an application function (Application Function, AF) 111.

The AGF 102 and the UPF 103 belong to network elements of a fixed network, and UE (or a terminal) 101 accesses a data network in the fixed network by using the AGF 102 and the UPF 103. The AMF 104, the SMF 105, the PCF 106, the AUSF 107, the UDM 108, the NEF 109, and the NRF 110 belong to network elements of a 5G control plane in a mobile network. The AGF 102 may be an independent network element in the fixed network, or may be disposed on an access network (Access Network, AN) of the fixed network, or may be a broadband network gateway (Broadband Network Gateway, BNG) or a broadband remote access server (Broadband Remote Access Server, BRAS). Optionally, the UE may access the AGF 102 by using a WIFI access point (Access Point, AP). Optionally, the AGF 102 supports interaction between an N2 interface and the AMF 104. The AUSF 107 supports a point-to-point protocol over Ethernet (Point to Point Protocol over Ethernet, PPPoE) authentication mode. An authentication, authorization, and accounting (Authentication, Authorization, Accounting, AAA) server and a policy function of a broadband forum (Broadband Forum, BBF) network are separately integrated into the 5G control plane.

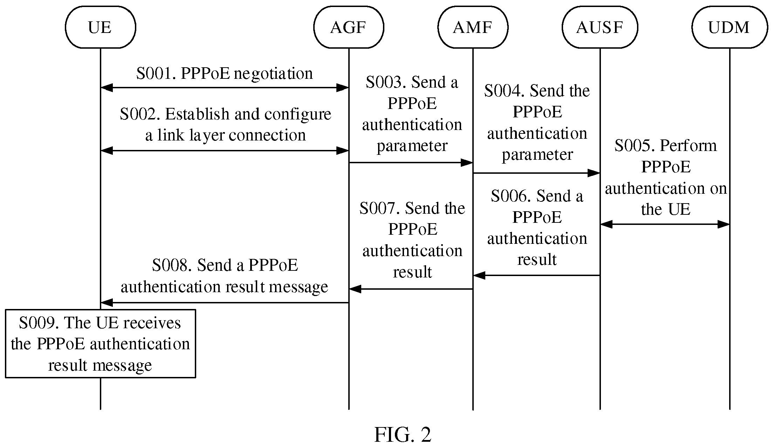

An embodiment of this application provides a method for accessing a fixed network. Referring to FIG. 2, the method includes the following steps.

S001. An AGF performs a PPPoE negotiation with UE, so that the UE discovers the AGF and establishes a PPPoE session with the AGF.

Optionally, in this process, the UE may send an indication to the AGF to indicate that an extended PPP protocol defined in the present invention is used to perform interaction. The indication may be a capability indication of the UE, an extended PPP protocol indication, a 5G access indication, or the like. The indication may help the UE to discover an AGF with this capability. For example, only the AGF with this capability replies with a response message. If the AGF supports the extended PPP protocol, a message sent to the UE in this process may carry an indication to indicate that the extended PPP protocol defined in the present invention is used to perform interaction. The indication may be a capability indication of the AGF, an extended PPP protocol indication, or a 5G access indication.

Specifically, the PPPoE negotiation includes the following steps.

S0011. The UE sends a PPPoE active discovery initiation (PPPoE Active Discovery Initiation, PADI)) to the AGF

S0012. The AGF sends a PPPoE active discovery offer (PPPoE Active Discovery Offer, PADO) to the UE.

S0013. The UE sends a PPPoE active discovery request (PPPoE Active Discovery Request) to the AGE

S0014. The AGF sends a PPPoE active discovery session-confirmation (PPPoE Active Discovery Session-confirmation, PADS) to the UE.

For details, refer to an existing PPPoE negotiation mechanism, namely, description of a PPPoE discovery stage (Discovery Stage). Details are not described herein again.

S002. The UE establishes and configures a link layer connection with the AGF to negotiate an authentication mode.

Optionally, in this process, the UE may send an indication to the AGF to indicate that an extended authentication mode defined in the present invention is used. The indication may be the capability indication of the UE, an extended authentication mode indication, the 5G access indication, or the like. If the AGF supports the extended authentication protocol, a message sent to the UE in this process may carry an indication to indicate that the extended PPP protocol defined in the present invention is used to perform interaction. The indication may be the capability indication of the AGF, the extended authentication mode indication, or the 5G access indication.

Specifically, step S002 includes the following steps.

S0021. The UE sends a link control protocol (Link Control Protocol, LCP) negotiation message to the AGF, where the link control protocol negotiation message includes indication information used to indicate a used authentication mode, for example, a password authentication protocol (Password Authentication Protocol, PAP) or a challenge handshake authentication protocol (Challenge Handshake Authentication Protocol, CHAP).

S0022. The AGF sends a challenge message Challenge to the UE.

S0023. The UE encrypts the challenge packet, configures a password to generate a key, and sends a challenge response message to the AGF, where the challenge response message includes the generated key and a user name.

S003. The AGF sends a PPPoE authentication parameter to an AMF.

The PPPoE authentication parameter finally needs to be forwarded by the AMF to an AUSF, where the PPPoE authentication parameter is used by the AUSF to perform PPPoE authentication on the UE. The PPPoE authentication parameter may include at least one of the following messages: a challenge packet identifier (Challenge packet ID), a password (password), a key (key), a user name, and other parameters. The PPPoE authentication parameter may be placed in a PPPoE container (PPPoE Container), and the PPPoE container is added into a request message to be sent to the AMF. The AGF may further send a fixed network access indication to the AMF. The PPPoE authentication parameter or the fixed network access indication is used by the AUSF to determine to use a PPPoE authentication method.

For example, an attach request message sent by the AGF to the AMF may include the PPPoE authentication parameter and/or the fixed network access indication.

S004. After receiving the PPPoE authentication parameter, the AMF sends the PPPoE authentication parameter to the AUSF.

For example, an authentication request message (Authentication Request) sent to the AUSF may include the PPPoE authentication parameter.

S005. After receiving the PPPoE authentication parameter, the AUSF performs the PPPoE authentication on the UE based on the PPPoE authentication parameter.

For example, the PPPoE authentication may be performed on the UE by using the PPPoE authentication parameter in the received authentication request message.

S006. The AUSF sends a PPPoE authentication result to the AMF, where the PPPoE authentication result may be included in a PPPoE container.

The PPPoE authentication result may indicate that authentication on the UE succeeds or fails. In addition, the PPPoE authentication result needs to be forwarded by the AMF and the AGF to the UE.

For example, an authentication response message (Authentication Response) sent to the AMF may include the PPPoE authentication result.

S007. After receiving the PPPoE authentication result, the AMF sends the PPPoE authentication result to the AGF.

For example, an attach accept message (Attach Accept) sent to the AGF may include the PPPoE authentication result.

S008. After receiving the PPPoE authentication result from the AMF, the AGF sends a PPPoE authentication result message to the UE. The PPPoE authentication result message includes the PPPoE authentication result.

S009. The UE receives the PPPoE authentication result message.

According to the method for accessing a fixed network provided in this embodiment of this application, after the UE establishes the PPPoE session with the AGF, the AGF sends the PPPoE authentication parameter to the AUSF, where the PPPoE authentication parameter is used by the AUSF to authenticate the UE. Then the AUSF feeds back the authentication result to the UE, in this way, convergence of core network devices in the mobile network and the fixed network is implemented.

For example, the following describes the method for accessing a fixed network by using a specific message. A person skilled in the art may understand that a specific message name is not limited in this embodiment of this application.

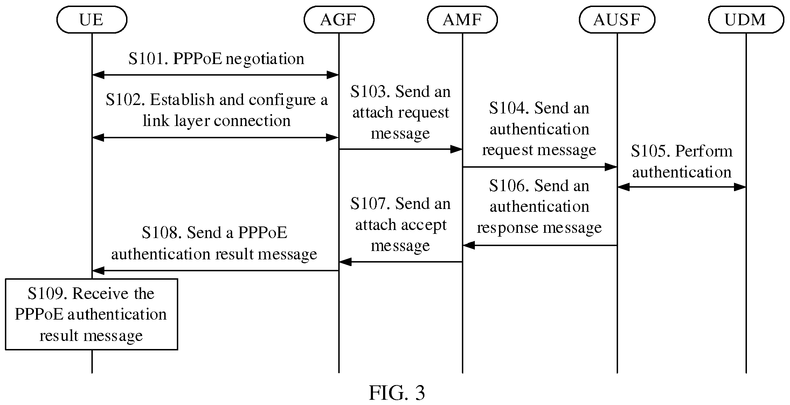

An embodiment of this application provides another method for accessing a fixed network. Referring to FIG. 3, the method includes the following steps.

S101 and S102 are the same as steps S001 and S002. Details are not described herein again.

S103. The AGF sends an attach request message (Attach Request) to an AMF.

The attach request message includes a PPPoE authentication parameter and/or a fixed network access indication.

The attach request message may be, for example, an attach request message of a 5G non-access stratum (Non-Access Stratum, NAS).

S104. After receiving the attach request message, the AMF sends an authentication request message to an AUSF.

The authentication request message includes the PPPoE authentication parameter and/or the fixed network access indication.

S105. After the AUSF receives the authentication request message, the AUSF determines to use a PPPoE authentication method based on the PPPoE authentication parameter or the fixed network access indication in the authentication request message, and obtains a subscriber data service (Subscriber Data Service) from UDM to perform PPPoE authentication on UE.

S106. The AUSF sends an authentication response message to the AMF.

The authentication response message includes a PPPoE authentication result.

S107. After the AMF receives the authentication response message, the AMF sends an attach accept message (Attach Accept) to the AGF.

The attach accept message includes the PPPoE authentication result.

S108. After receiving the attach accept message, the AGF sends a PPPoE authentication result message to the UE.

The PPPoE authentication result message includes the PPPoE authentication result. S109. The UE receives the PPPoE authentication result message.

According to the method for accessing a fixed network provided in this embodiment of this application, after the AGF performs the PPPoE negotiation with the UE, the AGF sends the PPPoE authentication parameter and/or the fixed network access indication to the AUSF by using the AMF. Then the AUSF determines to use the PPPoE authentication method based on the PPPoE authentication parameter and/or the fixed network access indication, and authenticates the UE based on the PPPoE authentication parameter. In this way, a PPPoE authentication process is supported in a 5G core network.

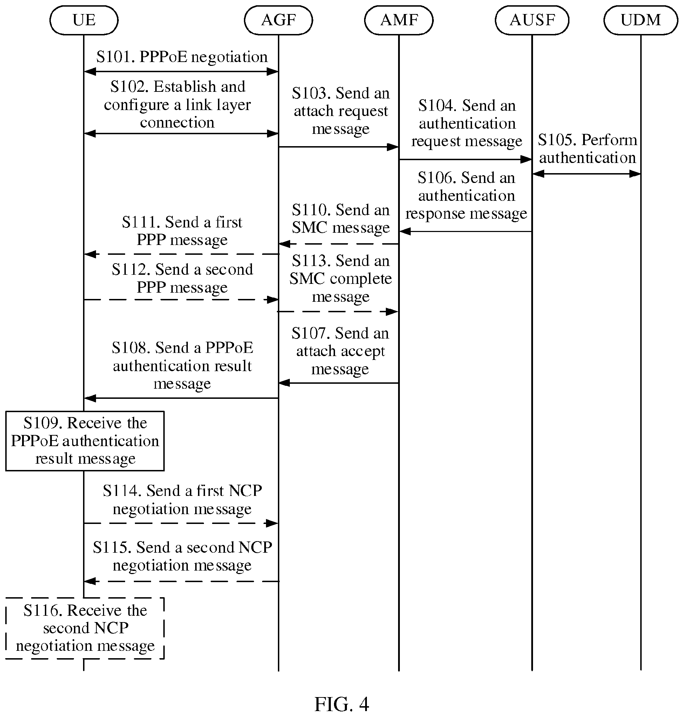

Optionally, referring to FIG. 4, before step S107, the method may further include S110 to S113.

S110. The AMF sends a security mode command (Security Mode Command, SMC) message to the AGF. The message is encapsulated by using an N2 interface protocol of a 5G architecture.

S111. After receiving the SMC message, the AGF sends a first point-to-point protocol (Point to Point Protocol, PPP) message to the UE. The first PPP message may be an extended LCP packet, or may be a newly defined PPP protocol packet.

The first PPP message includes the SMC message or a NAS encryption activation parameter.

S112. After receiving the first PPP message, the UE sends a second PPP message to the AGF. Correspondingly, the second PPP message may be an extended LCP packet, or may be a newly defined PPP protocol packet.

The UE needs to upload the SMC message or the NAS encryption activation parameter to a NAS. The second PPP message includes an SMC complete message or a NAS encryption activation parameter.

S113. After receiving the second PPP message, the AGF sends an SMC complete message or a NAS encryption activation parameter to the AMF.

Optionally, after step S109, the method may further include S114 to S116.

S114. The UE sends a first network control protocol (Network Control Protocol, NCP) negotiation (Negotiation) message to the AGF.

S115. After receiving the first NCP negotiation message, the AGF sends a second NCP negotiation message to the UE.

The second NCP negotiation message includes a source Internet protocol (Internet Protocol, IP) address and a destination IP address that are used for transmission of a NAS message (that is, a session management (Session Management) message, a mobility management (Mobility Management) message, a deregistration (Deregistration) message, or the like in the following), or a source media access control (Media Access Control) address or a destination MAC address that is used for transmission of the NAS message. Specifically, the second NCP negotiation message may include at least one of the following information: an IP address used by the AGF to send a subsequent NAS message, an IP address used by the AGF to receive a subsequent NAS message, an IP address used by the UE to send a subsequent NAS message, an IP address used by the UE to receive a subsequent NAS message, a source MAC address, and a destination MAC address. The IP address used by the AGF to receive the subsequent NAS message may be the same as the IP address used to send the subsequent NAS message, and the MAC address used by the AGF to receive the subsequent NAS message may be the same as the MAC address used to send the subsequent NAS message. Similarly, the IP address used by the UE to receive the subsequent NAS message may be the same as the IP address used to send the subsequent NAS message, and the MAC address used by the UE to receive the subsequent NAS message may be the same as the MAC address used to send the subsequent NAS message.

S116. The UE receives the second NCP negotiation message.

In the foregoing method for accessing a fixed network, an extended PPP message or a newly added PPP message is used to implement an SMC process of NAS encryption and activation between the UE and the 5G core network. After an NCP negotiation process, the UE may use an IP packet or a MAC packet to encapsulate the NAS message and interact with the 5G core network by using the AGF, so that the 5G core network does not consider access technologies (with a same received message and a same processing procedure).

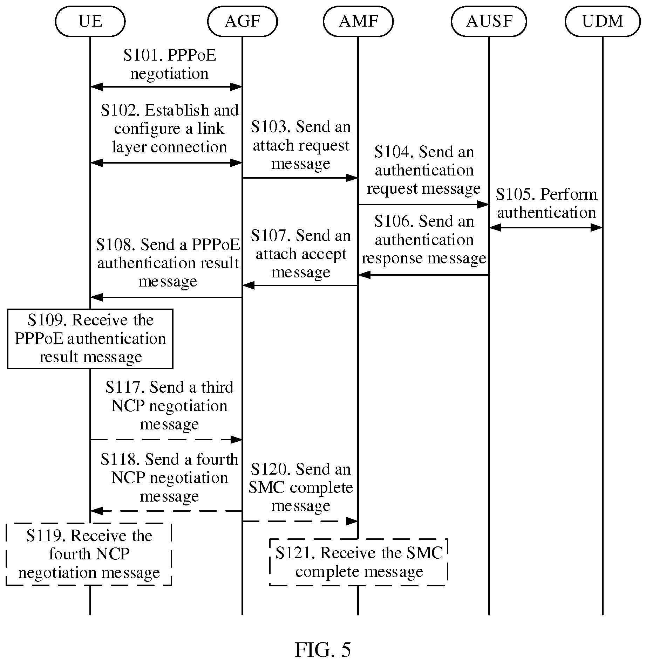

Optionally, referring to FIG. 5, in step S107, the attach accept message (Attach Accept) sent by the AMF to the AGF further includes the SMC message or the NAS encryption activation parameter. In step S108, the PPPoE authentication result message sent by the AGF to the UE further includes the SMC message or the NAS encryption activation parameter. After step S109, the method may further include S117 to S121.

S117. The UE sends a third NCP negotiation message to the AGF.

The third NCP negotiation message includes the SMC complete message or the NAS encryption activation parameter.

S118. After receiving the third NCP negotiation message, the AGF sends a fourth NCP negotiation message to the UE.

The fourth NCP negotiation message includes the source IP address and the destination IP address used for transmission of the NAS message, or the source MAC address and the destination MAC address used for transmission of the NAS message. For a specific description of the IP address and the MAC address, refer to step S115. Details are not described herein again.

S119. The UE receives the fourth NCP negotiation message.

S120. The AGF sends the SMC complete message to the AMF.

S121. The AMF receives the SMC complete message.

In the foregoing method for accessing a fixed network, the enhanced PPP protocol message or the newly added PPP protocol message is used to implement the SMC process of NAS encryption and activation between the UE and the 5G core network. After the NCP negotiation process, the UE may use the IP packet or the MAC packet to encapsulate the NAS message and interact with the 5G core network by using the AGF, so that the 5G core network does not consider a plurality of accesses (with a same received message and a same processing procedure).

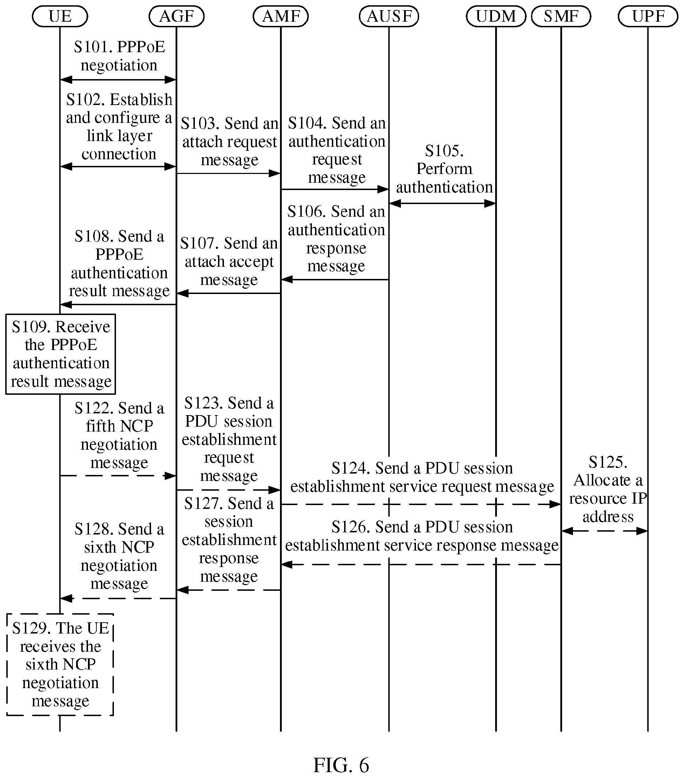

Optionally, referring to FIG. 6, after step S109, the method may further include S122 to S129.

S122. The UE sends a fifth NCP negotiation message to the AGF.

Optionally, in this process, the UE may send an indication to the AGF to indicate that an extended NCP negotiation manner defined in the present invention is used. The indication may be a capability indication of the UE, an indication of the extended NCP negotiation manner, a 5G access indication, a PDU session establishment indication, or the like.

S123. After receiving the fifth NCP negotiation message, the AGF sends a packet data unit (Packet Data Unit, PDU) session establishment request message (PDU Session Establishment) to the AMF, where the PDU session establishment request message includes a user identifier and/or a fixed network access identifier.

S124. After receiving the PDU session establishment request message, the AMF sends a PDU session establishment service request message (PDU Session Establishment Service Request) to an SMF, where the PDU session establishment service request message includes the user identifier and/or the fixed network access identifier.

S125. After receiving the PDU session establishment service request message, the SMF selects a corresponding UPF, and allocates, to the UE, a resource and an IP address used for transmission of a user plane data packet. Optionally, the SMF uses a corresponding quality of service (Quality of Service, QoS) and charging policy based on the user identifier and/or the fixed network access identifier. The QoS and charging policy may be locally configured by the SMF, or obtained from a policy control function PCF.

S126. The SMF sends a PDU session establishment service response message (PDU Session Establishment Service Response) to the AMF, where the PDU session establishment service response message includes a QoS and charging policy.

The PDU session establishment service response message includes the IP address used for transmission of the user plane data packet.

S127. After receiving the PDU session establishment service response message, the AMF sends a session establishment response message (Session Establishment Response) to the AGF.

The session establishment response message includes the IP address used for transmission of the user plane data packet and the QoS and/or charging policy.

S128. After receiving the session establishment response message, the AGF sends a sixth NCP negotiation message to the UE. The AGF may convert the QoS and/or charging policy into a parameter corresponding to a QoS and/or charging policy of the fixed network.

The sixth NCP negotiation message includes the IP address used for transmission of the user plane data packet. Optionally, the AGF allocates a source IP address and a destination IP address that are used for transmission of a subsequent NAS message, or a source MAC address and a destination MAC address that are used for transmission of the subsequent NAS message; and sends, to the UE, the source IP address and the destination IP address, or the source MAC address and the destination MAC address by using the sixth NCP negotiation message. For a specific description of the IP address and the MAC address, refer to step S115. Details are not described herein again.

S129. The UE receives the sixth NCP negotiation message.

In the foregoing method for accessing a fixed network, an NCP negotiation process is converted into a PDU session establishment process. In this way, the 5G core network does not consider a plurality of accesses (with same processing).

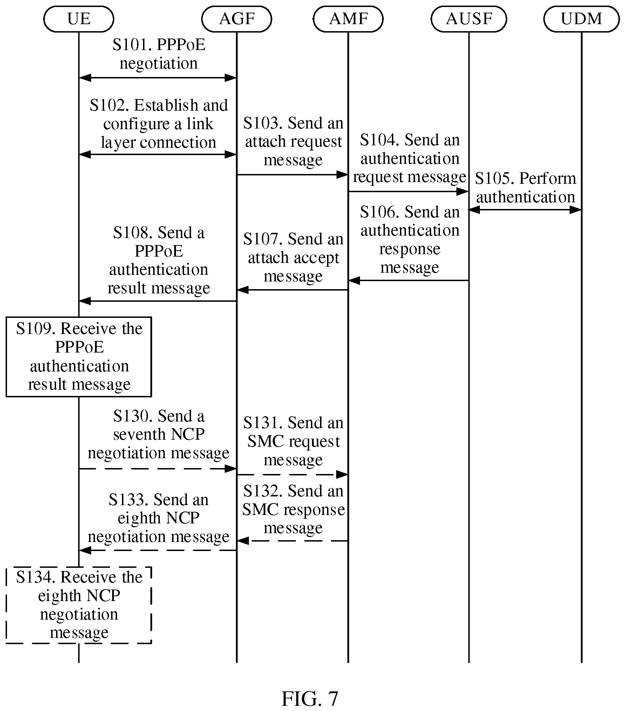

Optionally, referring to FIG. 7, after step S109, the method may further include S130 to S134.

5130. The UE sends a seventh NCP negotiation message to the AGF.

The seventh NCP negotiation message includes an SMC request message (SMC Request) or a NAS encryption activation parameter.

S131. After receiving the seventh NCP negotiation message, the AGF sends an SMC request message to the AMF.

S132. After receiving the SMC request message, the AMF sends an SMC response message (SMC Response) to the AGF.

S133. After receiving the SMC response message, the AGF sends an eighth NCP negotiation message to the UE.

The eighth NCP negotiation message includes the SMC response message or the NAS encryption activation parameter. Optionally, the AGF allocates a source IP address and a destination IP address that are used for transmission of a subsequent NAS message, or a source MAC address and a destination MAC address that are used for transmission of the subsequent NAS message; and sends, to the UE, the source IP address and the destination IP address, or the source MAC address and the destination MAC address by using the eighth NCP negotiation message. For a specific description of the IP address and the MAC address, refer to step S115. Details are not described herein again.

S134. The UE receives the eighth NCP negotiation message.

In the foregoing method for accessing a fixed network, an enhanced PPP protocol is used to implement an SMC process of NAS encryption and activation between the UE and the 5G core network. In addition, an SMC interaction is initiated by the UE, and no new PPP message needs to be added. After the NCP process, the UE may interact with the 5G core network by encapsulating the NAS message by using an IP packet. In this way, the 5G core network does not consider a plurality of accesses (with same processing).

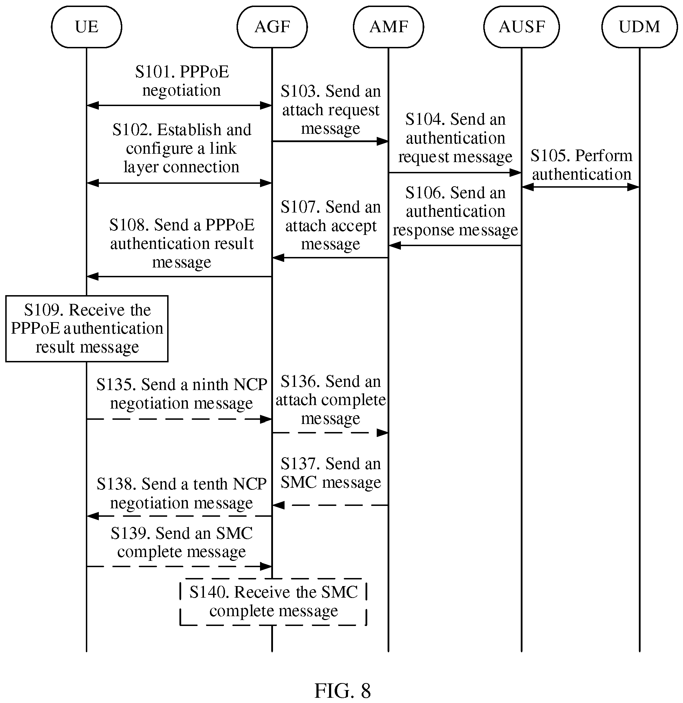

Optionally, referring to FIG. 8, after step S109, the method may further include S135 to S140.

S135. The UE sends a ninth NCP negotiation message to the AGF.

Optionally, in this process, the UE may send an indication to the AGF to indicate that an extended NCP negotiation manner defined in the present invention is used. The indication may be a capability indication of the UE, an indication of an extended NCP negotiation manner, a 5G access indication, or the like.

S136. After receiving the ninth NCP negotiation message, the AGF sends an attach complete message (Attach Complete) to the AMF.

S137. After receiving the attach complete message, the AMF sends the SMC message to the AGF.

S138. After receiving the SMC message, the AGF sends a tenth NCP negotiation message to the UE.

The tenth NCP negotiation message includes an SMC message. Optionally, the AGF allocates a source IP address and a destination IP address that are used for transmission of a subsequent NAS message, or a source MAC address and a destination MAC address that are used for transmission of the subsequent NAS message; and sends, to the UE, the source IP address and the destination IP address, or the source MAC address and the destination MAC address by using the tenth NCP negotiation message. For a specific description of the IP address and the MAC address, refer to step S115. Details are not described herein again.

S139. After receiving the tenth NCP negotiation message, the UE sends the SMC complete message (SMC Complete) to the AGF.

Specifically, the UE sends a user uplink data packet to the AGF, where the user uplink data packet includes the SMC complete message.

Alternatively, the UE sends an eleventh NCP negotiation message to the AGF, where the eleventh NCP negotiation message includes the SMC complete message.

Alternatively, the UE sends the SMC complete message to the AGF by using the IP address or the MAC address that is used for transmission of the subsequent NAS message and that is received in S138.

S140. The AGF receives the SMC complete message.

Specifically, the AGF receives the user uplink data packet, or receives the eleventh NCP negotiation message, or receives the SMC complete message that is transmitted by using the IP address or the MAC address that is used for transmission of the subsequent NAS message.

In the foregoing method for accessing a fixed network, an enhanced NCP protocol is used to implement a NAS encryption activation SMC message sent in the 5G core network. The SMC complete message is transmitted by a user plane, and no new PPP message needs to be added. After the NCP process, the UE may interact with the 5G core network by encapsulating the NAS message by using an IP packet. In this way, the 5G core network does not consider a plurality of accesses (with same processing).

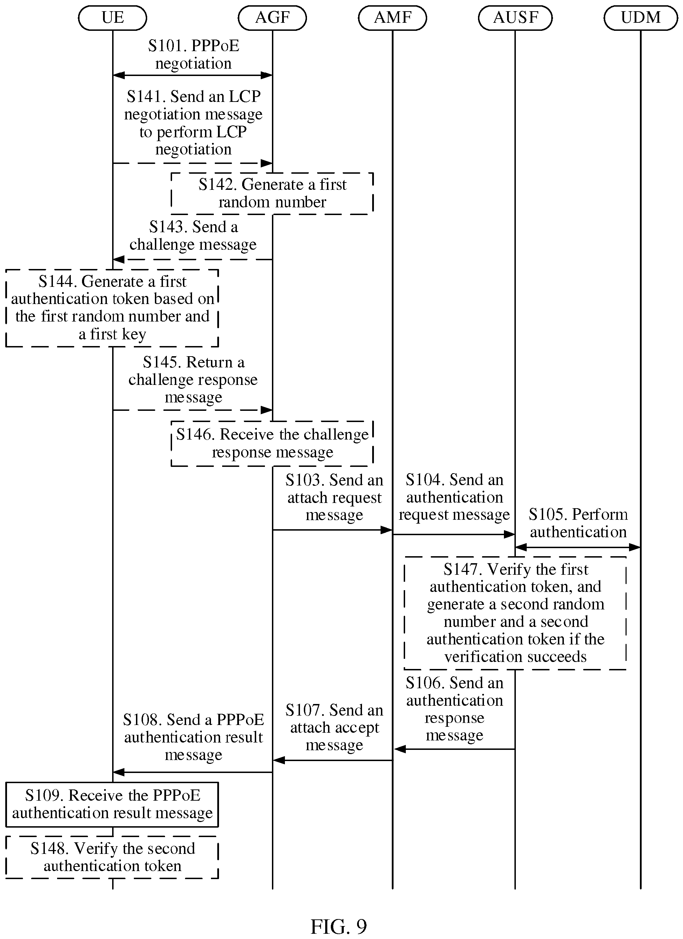

Optionally, referring to FIG. 9, in this embodiment of this application, step S002 may be further extended and enhanced, and step S002 includes S141 to S146.

S141. The UE sends an LCP negotiation message to the AGF to perform LCP negotiation (Negotiation), to determine to use a CHAP authentication process.

This step is extension and enhancement of step S0021.

A conventional CHAP authentication method is one-way authentication. To be specific, a core network authenticates the UE. An enhanced CHAP authentication method in this application is a two-way authentication method. In other words, authentication performed by the UE on the core network is further included. A delivery condition of the indication information may be that the AGF knows that the AGF accesses a 3GPP core network, and therefore, the AGF delivers the indication information to the UE during an LCP negotiation process.

Specifically, the indication information may be a bit in the LCP negotiation message, for example, an idle bit or a reserved bit in the LCP negotiation message. When the bit is set to 0, the original CHAP authentication method is used. When the bit is set to 1, the enhanced CHAP authentication method is used. Alternatively, when the bit is set to 1, the original CHAP authentication method is used. When the bit is set to 0, the enhanced CHAP authentication method is used. The network element AGF can determine based on configuration information whether to use the conventional CHAP authentication method or the enhanced CHAP authentication method. The configuration information includes configuration information that is used for two-way authentication and that is configured by an operator, configuration information that is used for two-way authentication required by the UE during a negotiation process, or configuration information of the AGF.

S142. After receiving the LCP negotiation message, the AGF generates a first random number.

S143. The AGF sends a challenge message (Challenge) to the UE to initiate CHAP authentication.

The challenge request message may include the first random number. This step is extension and enhancement of step S0022.

S144. After receiving the challenge request message, the UE generates a first authentication token based on the first random number and a first authentication parameter.

The first authentication parameter may include: a preconfigured key or another preconfigured parameter (for example, IMSI information of the UE or other information of the UE, where the information needs to be known by a network side).

S145. The UE returns a challenge response message (Response).

The challenge response message may further include the first authentication token. This step is extension and enhancement of step S0023.

S146. The AGF receives the challenge response message.

In this case, the attach request message in step S103 and the authentication request message in S104 further include the first random number and the first authentication token, so that the AUSF obtains the first random number and the first authentication token. In other words, the AGF sends the first random number and the first authentication token to the AUSF by using the AMF, where the first random number and the first authentication token are used by the AUSF to authenticate the UE. A process of receiving and sending the first random number and the first authentication token by the AMF is not described again.

Optionally, before step S106, the method further includes the following step.

S147. The AUSF verifies the first authentication token, and generates a second random number and a second authentication token if the verification succeeds.

Specifically, the AUSF generates a temporary authentication token based on the first random number and a second authentication parameter, and then compares the temporary authentication token with the first authentication token. If the temporary authentication token is the same as the first authentication token, it indicates that the first authentication token is verified successfully. In other words, the network side successfully authenticates the UE.

Specifically, the AUSF generates the second authentication token based on the first random number, the second random number, and a third authentication parameter.

In this case, the authentication response message in step S106, the attach accept message in S107, and the PPPoE authentication result message in step S108 further include the second random number and the second authentication token. In other words, the AUSF sends the second random number and the second authentication token to the UE by using the AMF and the AGF, where the second random number and the second authentication token are used by the UE to authenticate the network side. A process of receiving and sending the second random number and the second authentication token by the AMF and the AGF is not described again.

Optionally, after step S109, the method further includes the following step.

S148. The UE verifies the second authentication token.

Specifically, the UE generates a temporary authentication token based on the first random number, the second random number, and a fourth authentication parameter, and then compares the temporary authentication token with the second authentication token. If the temporary authentication token is the same as the second authentication token, it indicates that the second authentication token is verified successfully. In other words, the UE successfully authenticates the network side.

In the foregoing steps, the method in which the network side first authenticates the UE and then the UE authenticates the network side is implemented.

It should be noted that steps S141 to S148 shown in FIG. 9 may be combined with other steps in FIG. 3 to FIG. 8. Details are not specifically described.

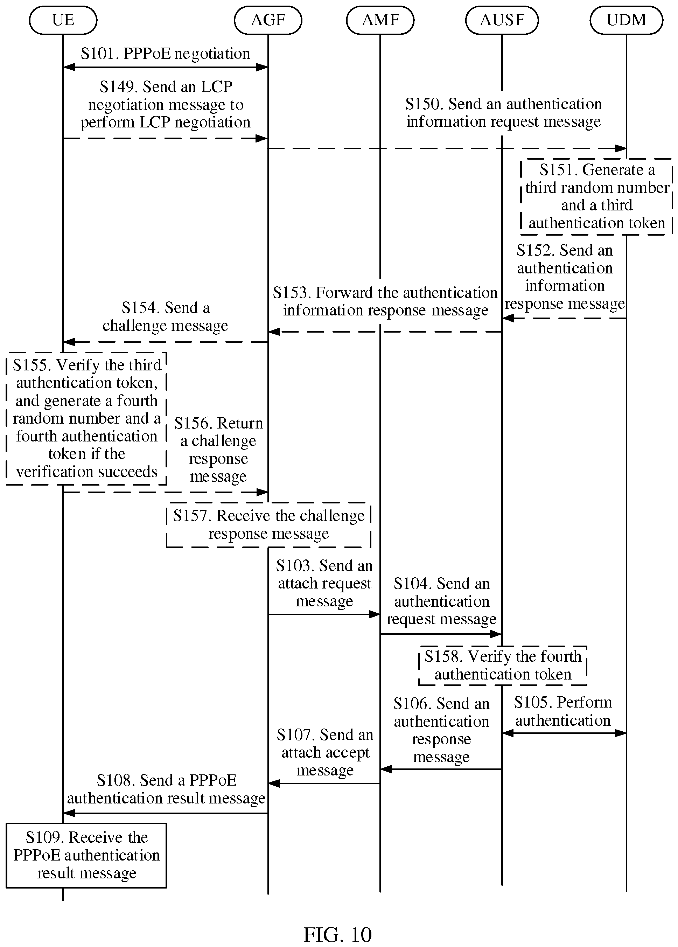

Referring to FIG. 10, in this embodiment of this application, step S002 may be further extended and enhanced. The method may further include S149 to S157.

S149. The UE sends an LCP negotiation message to the AGF to perform LCP negotiation (Negotiation), to determine to use a CHAP authentication process.

The LCP negotiation message includes identity information of the UE. This step is extension and enhancement of step S0021.

S150. The AGF sends an authentication information request message (Authentication Information Info Request) to the UDM to request authentication information.

The authentication information request message includes the identity information of the UE. The request information needs to be forwarded by the AMF and AUSF.

S151. After receiving the authentication information request message, the UDM generates a third random number and a third authentication token based on the identity information of the UE.

Specifically, the UDM finds an LTE root key of the UE based on the identity information of the UE, and generates the third random number and the third authentication token and a subsequently to-be-used AUSF key based on the LTE root key.

S152. The UDM sends a UE authentication information response message (UE Authentication Information Info Response) to the AUSF.

The UE authentication information response message includes the third random number, the third authentication token, and the AUSF key.

S153. The AUSF receives the UE authentication information response message, obtains the AUSF key, and sends the authentication information response message to the AGF by using the AMF.

S154. After receiving the authentication information response message, the AGF sends a challenge message (Challenge) to the UE to initiate CHAP authentication.

The challenge request message may include the third random number and the third authentication token, where the third random number and the third authentication token are used by the UE to authenticate the network side. This step is extension and enhancement of step S0022.

S155. After receiving the challenge request message, the UE verifies the third authentication token based on the third random number and the identity information of the UE; and if the verification succeeds, generates a fourth random number, and generates a fourth authentication token based on the third random number, the fourth random number, and a fifth key.

S156. The UE returns a challenge response message (Response).

The challenge response message further includes the fourth random number and the fourth authentication token. This step is extension and enhancement of step S0023.

S157. The AGF receives the challenge response message.

In this case, the attach request message and the authentication request message further include the fourth random number and the fourth authentication token, so that the AUSF obtains the fourth random number and the fourth authentication token. In other words, the AGF sends the fourth random number and the fourth authentication token to the AUSF by using the AMF, where the fourth random number and the fourth authentication token are used by the AUSF to authenticate the UE. A process of receiving and sending the fourth random number and the fourth authentication token by the AMF is not described again.

Optionally, before step S105, the method further includes the following step.

S158. The AUSF verifies the fourth authentication token based on the AUSF key and the fourth random number.

If the verification succeeds, it indicates that the AUSF successfully authenticates the UE.

In the foregoing steps, the method in which the UE first authenticates the network side and then the network side authenticates the UE is implemented.

It should be noted that steps S149 to S158 shown in FIG. 10 may be combined with other steps in FIG. 3 to FIG. 8.

An embodiment of this application provides a terminal, configured to perform the foregoing method. In the embodiments of this application, function modules of the terminal may be obtained through division according to the foregoing method examples. For example, function modules may be obtained through division based on corresponding functions, or two or more functions may be integrated into one processing module. The integrated module may be implemented in a form of hardware, or may be implemented in a form of a software function module. It should be noted that the module division in the embodiments of this application is an example, and is merely logical function division. There may be another division manner in actual implementation.

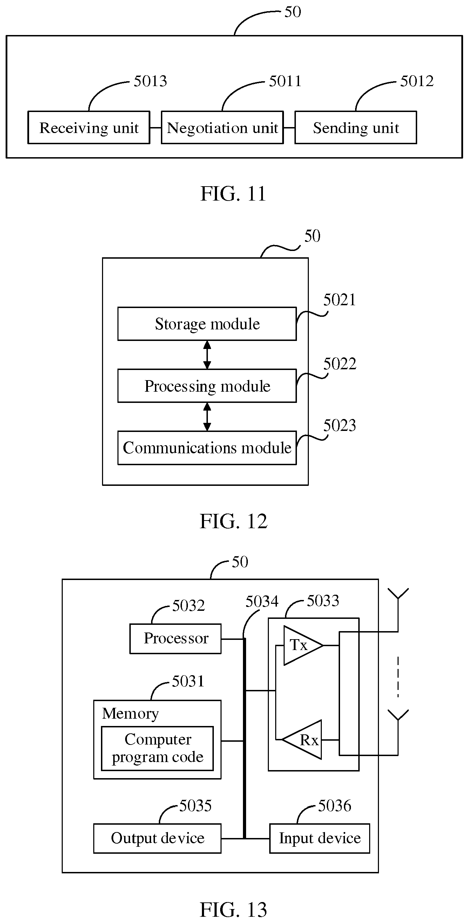

When function modules are obtained through division based on corresponding functions, FIG. 11 is a possible schematic structural diagram of the terminal in the foregoing embodiments. A terminal 50 includes a negotiation unit 5011, a sending unit 5012, and a receiving unit 5013. The negotiation unit 5011 is configured to support the terminal in performing the processes S001 and S002 in FIG. 2, the processes S001 and S002 in FIG. 3, the processes S001 and S002 in FIG. 4, the processes S001 and S002 in FIG. 5, the processes S001 and S002 in FIG. 6, the processes S001 and S002 in FIG. 7, the processes S001 and S002 in FIG. 8, the processes S001, S144, and S148 in FIG. 9, and the processes S001 and S155 in FIG. 10. The sending unit 5012 is configured to support the terminal in performing the processes S112 and S114 in FIG. 4, the process S117 in FIG. 5, the process S122 in FIG. 6, the process S130 in FIG. 7, the processes S135 and S139 in FIG. 8, the processes S141 and S145 in FIG. 9, and the processes S149 and S156 in FIG. 10. The receiving unit 5013 is configured to support the terminal 50 in performing the process S009 in FIG. 2, the process S109 in FIG. 3, the processes S109 and S116 in FIG. 4, the processes S109 and S119 in FIG. 5, the processes S109 and S122 in FIG. 6, the processes S109 and S134 in FIG. 7, the process S109 in FIG. 8, the process S109 in FIG. 9, and the process S109 in FIG. 10. All related content of the steps in the foregoing method embodiments may be cited in function descriptions of corresponding function modules. Details are not described herein again.

When an integrated unit is used, FIG. 12 is a possible schematic structural diagram of the terminal in the foregoing embodiments. A terminal 50 includes a processing module 5022 and a communications module 5023. The processing module 5022 is configured to control and manage actions of the terminal 50. For example, the processing module 5022 is configured to support the terminal in performing the processes S001 and S002 in FIG. 2, the processes S001 and S002 in FIG. 3, the processes S001 and S002 in FIG. 4, the processes S001 and S002 in FIG. 5, the processes S001 and S002 in FIG. 6, the processes S001 and S002 in FIG. 7, the processes S001 and S002 in FIG. 8, the processes S001, S144, and S148 in FIG. 9, and the processes S001 and S155 in FIG. 10. The communications module 5023 is configured to support communication between the terminal and another entity, for example, communication with a function module or a network entity shown in FIG. 1. The terminal 50 may further include a storage module 5021, configured to store program code and data of the terminal.

The processing module 5022 may be a processor or a controller, such as a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 5022 may implement or execute various example logical blocks, modules, and circuits described with reference to content disclosed in this application. Alternatively, the processor may be a combination for implementing a computing function, for example, a combination of one or more microprocessors or a combination of a DSP and a microprocessor. The communications module 5023 may be a transceiver, a transceiver circuit, a network communications interface, or the like. The storage module 5021 may be a memory.

When the processing module 5022 is a processor, the communications module 5023 is a transceiver, and the storage module 5021 is a memory, the terminal in this embodiment of this application may be the terminal described below.

Referring to FIG. 13, the terminal 50 includes a processor 5032, a transceiver 5033, a memory 5031, and a bus 5034. Optionally, the terminal 50 may further include an output device 5035 and an input device 5036. The transceiver 5033, the processor 5032, the memory 5031, the output device 5035, and the input device 5036 are connected to each other by using the bus 5034.

The processor 5032 may be a general-purpose central processing unit (Central Processing Unit, CPU), a microprocessor, an application-specific integrated circuit (Application-Specific Integrated Circuit, ASIC)), or one or more integrated circuits configured to control program execution in the solution of this application. The processor 5032 may also be a plurality of processors. Each processor may be a single-core (single-CPU) processor or a multi-core (multi-CPU) processor. The processors may be one or more devices, circuits, and/or processing cores configured to process data (for example, a computer program instruction).

The memory 5031 may be, but is not limited to, a read-only memory (Read-Only Memory, ROM) or another type of static storage device capable of storing static information and instructions, a random access memory (Random Access Memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. The memory 5031 may exist independently, and is connected to the processor 5032 by using the bus. The memory 5031 may also be integrated with the processor 5032. The memory 5031 is configured to store application program code for performing the solution of this application, and execution of the application program code is controlled by the processor 5032. The processor 5032 is configured to execute the computer program code stored in the memory 5031, to implement the method in this embodiment of this application.

The transceiver 5033 may use any apparatus such as a transceiver, and is configured to communicate with another device or a communications network such as the Ethernet, a radio access network (Radio Access Network, RAN), or a wireless local area network (Wireless Local Area Networks, WLAN). The transceiver 5033 includes a transmitter Tx and a receiver Rx.

The bus 5034 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of indication, the bus is indicated by using only one bold line in the figure. However, it does not indicate that there is only one bus or only one type of bus.

The output device 5035 communicates with the processor 5032 and may display information in various manners. For example, the output device 5035 may be a liquid crystal display (Liquid Crystal Display, LCD), a light emitting diode (Light Emitting Diode, LED) display device, a cathode ray tube (Cathode Ray Tube, CRT) display device, a projector (projector), or the like. The input device 5036 communicates with the processor 5032 and may receive input of a user in various manners. For example, the input device 5036 may be a mouse, a keyboard, a touch panel device, or a sensing device.

An embodiment of this application provides an access gateway network element of a fixed network, configured to perform the foregoing method. In this embodiment of this application, function modules of the access gateway network element may be obtained through division according to the foregoing method examples. For example, function modules may be obtained through division based on corresponding functions, or two or more functions may be integrated into one processing module. The integrated module may be implemented in a form of hardware, or may be implemented in a form of a software function module. It should be noted that the module division in the embodiments of this application is an example, and is merely logical function division. There may be another division manner in actual implementation.

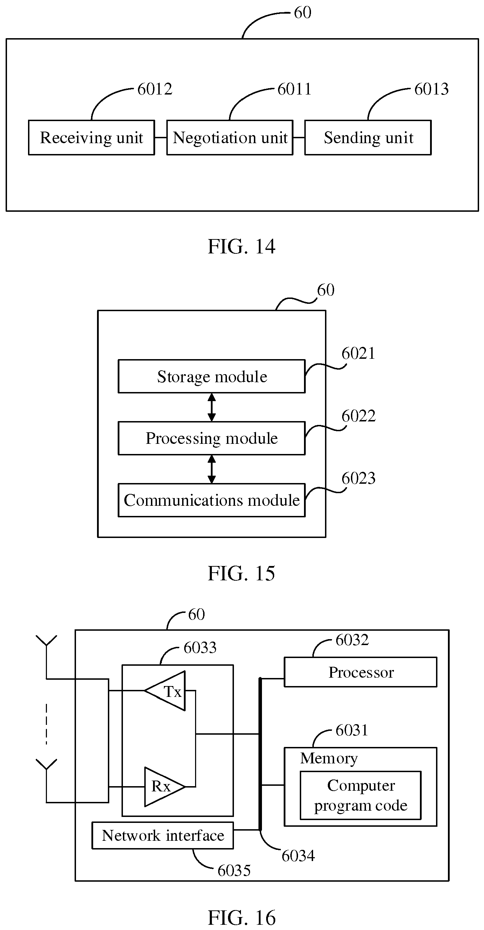

When function modules are obtained through division based on corresponding functions, FIG. 14 is a possible schematic structural diagram of the access gateway network element in the foregoing embodiments. An access gateway network element 60 includes a negotiation unit 6011, a receiving unit 6012, and a sending unit 6013. The negotiation unit 6011 is configured to support the access gateway network element in performing the processes S001 and S002 in FIG. 2, the processes S101 and S102 in FIG. 3, the processes S101 and S102 in FIG. 4, the processes S101 and S102 in FIG. 5, the processes S101 and S102 in FIG. 6, the processes S101 and S102 in FIG. 7, the processes S101 and S102 in FIG. 8, the processes S101 and S142 in FIG. 9, and the process S101 in FIG. 10. The receiving unit 6012 is configured to support the access gateway network element in performing the processes S003 and S008 in FIG. 2, the processes S103 and S108 in FIG. 3, the processes S103, S108, S111, S113, and S115 in FIG. 4, the processes S103, S108, and S118 in FIG. 5, the processes S103, S108, S123, and S128 in FIG. 6, the processes S103, S108, S131, and S133 in FIG. 7, the processes S103, S108, S136, S138, and S140 in FIG. 8, the processes S103, S108, S142, and S146 in FIG. 9, and the processes S103, S108, S150, S154, and S157 in FIG. 10. The sending unit 6013 is configured to support the access gateway network element in performing the processes S003 and S008 in FIG. 2, the processes S103 and S108 in FIG. 3, the processes S103, S108, S111, S113, and S115 in FIG. 4, the processes S103, S108, and S118 in FIG. 5, the processes S103, S108, S123, and S128 in FIG. 6, the processes S103, S108, S131, and S133 in FIG. 7, the processes S103, S108, S136, and S138 in FIG. 8, the processes S103 and S108 in FIG. 9, and the processes S103, S108, S150, and S154 in FIG. 10. All related content of the steps in the foregoing method embodiments may be cited in function descriptions of corresponding function modules. Details are not described herein again.

When an integrated unit is used, FIG. 15 is a possible schematic structural diagram of the access gateway network element in the foregoing embodiments. An access gateway network element 60 includes a processing module 6022 and a communications module 6023. The processing module 6022 is configured to control and manage an action of the access gateway network element 60. For example, the processing module 6022 is configured to support the access gateway network element in performing the processes S001 and S002 in FIG. 2, the processes S101 and S102 in FIG. 3, the processes S101 and S102 in FIG. 4, the processes S101 and S102 in FIG. 5, the processes S101 and S102 in FIG. 6, the processes S101 and S102 in FIG. 7, the processes S101 and S102 in FIG. 8, the processes S101 and S142 in FIG. 9, and the process S101 in FIG. 10. The communications module 6023 is configured to support communication between the access gateway network element and another entity, for example, communication with a function module or a network entity shown in FIG. 1. The access gateway network element 60 may further include a storage module 6021, configured to store program code and data of the access gateway network element.

The processing module 6022 may be a processor or a controller, such as a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 6022 may implement or execute various example logical blocks, modules, and circuits described with reference to content disclosed in this application. Alternatively, the processor may be a combination for implementing a computing function, for example, a combination of one or more microprocessors or a combination of a DSP and a microprocessor. The communications module 6023 may be a transceiver, a transceiver circuit, a communications interface, or the like. The storage module 6021 may be a memory.

When the processing module 6022 is a processor, the communications module 6023 is a transceiver or a network interface, and the storage module 6021 is a memory, the access gateway network element in this embodiment of this application may be an access gateway network element described below.

Referring to FIG. 16, the access gateway network element 60 includes a processor 6032, a memory 6031, and a bus 6034. When the access gateway network element is used as different network elements in actual cases, the access gateway network element may further include at least one transceiver 6033 and/or at least one network interface 6035. The transceiver 6033, the processor 6032, the network interface 6035, and the memory 6031 are connected to each other by using the bus 6034. The network interface 6035 is configured to connect to a network interface of another network element by using a wired or wireless link. For functions of other components in the access gateway network element 60, refer to function descriptions of corresponding components in the terminal 50. Details are not described herein again.

An embodiment of this application provides an access and mobility management network element, configured to perform the foregoing method. In this embodiment of this application, function modules of the access and mobility management network element may be obtained through division based on the foregoing method examples. For example, function modules may be obtained through division based on corresponding functions, or two or more functions may be integrated into one processing module. The integrated module may be implemented in a form of hardware, or may be implemented in a form of a software function module. It should be noted that the module division in the embodiments of this application is an example, and is merely logical function division. There may be another division manner in actual implementation.

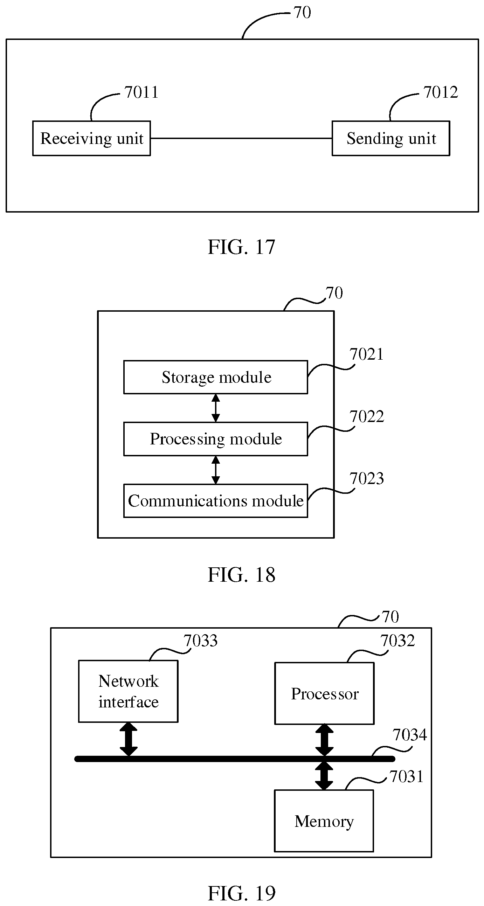

When function modules are obtained through division based on corresponding functions, FIG. 17 is a possible schematic structural diagram of the access and mobility management network element in the foregoing embodiments. An access and mobility management network element 70 includes a receiving unit 7011 and a sending unit 7012. The receiving unit 7011 is configured to support the access and mobility management network element in performing the processes S004 and S007 in FIG. 2, the processes S104 and S107 in FIG. 3, the processes S104, S107, and S110 in FIG. 4, the processes S104, S107, and S121 in FIG. 5, the processes S104, S107, S124, and S127 in FIG. 6, the processes S104, S107, and S132 in FIG. 7, the processes S104, S107, and S137 in FIG. 8, the processes S104 and S107 in FIG. 9, and the processes S104, S107, S150, and S153 in FIG. 10. The sending unit 7012 is configured to support the access and mobility management network element in performing the processes S004 and S007 in FIG. 2, the processes S104 and S107 in FIG. 3, the processes S104, S107, and S110 in FIG. 4, the processes S104 and S107 in FIG. 5, the processes S104, S107, S124, and S127 in FIG. 6, the processes S104, S107, and S132 in FIG. 7, the processes S104, S107, and S137 in FIG. 8, the processes S104 and S107 in FIG. 9, and the processes S104, S107, S150, and S153 in FIG. 10. All related content of the steps in the foregoing method embodiments may be cited in function descriptions of corresponding function modules. Details are not described herein again.

When an integrated unit is used, FIG. 18 is a possible schematic structural diagram of the access and mobility management network element in the foregoing embodiments. The access and mobility management network element 70 includes a processing module 7022 and a communications module 7023. The processing module 7022 is configured to control and manage an action of the access and mobility management network element 70. The communications module 7023 is configured to support communication between the access and mobility management network element and another entity, for example, communication with a function module or a network entity shown in FIG. 1. The access and mobility management network element 70 may further include a storage module 7021, configured to store program code and data of the access and mobility management network element.

The processing module 7022 may be a processor or a controller, such as a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 7022 may implement or execute various example logical blocks, modules, and circuits described with reference to content disclosed in this application. Alternatively, the processor may be a combination for implementing a computing function, for example, a combination of one or more microprocessors or a combination of a DSP and a microprocessor. The communications module 7023 may be a transceiver, a transceiver circuit, a communications interface, or the like. The storage module 7021 may be a memory.

When the processing module 7022 is a processor, the communications module 7023 is a network interface, and the storage module 7021 is a memory, the access and mobility management network element in this embodiment of this application may be an access and mobility management network element described below.

Referring to FIG. 19, the access and mobility management network element 70 includes a processor 7032, a network interface 7033, a memory 7031, and a bus 7034. The network interface 7033, the processor 7032, and the memory 7031 are connected to each other by using the bus 7034. For functions of components in the access and mobility management network element 70, refer to function descriptions of corresponding components in the terminal 50 and the access gateway network element 60. Details are not described herein again.

An embodiment of this application provides an authentication service network element of a mobile network, configured to perform the foregoing method. In this embodiment of this application, function modules of the authentication service network element may be obtained through division based on the foregoing method examples. For example, function modules may be obtained through division based on corresponding functions, or two or more functions may be integrated into one processing module. The integrated module may be implemented in a form of hardware, or may be implemented in a form of a software function module. It should be noted that the module division in the embodiments of this application is an example, and is merely logical function division. There may be another division manner in actual implementation.

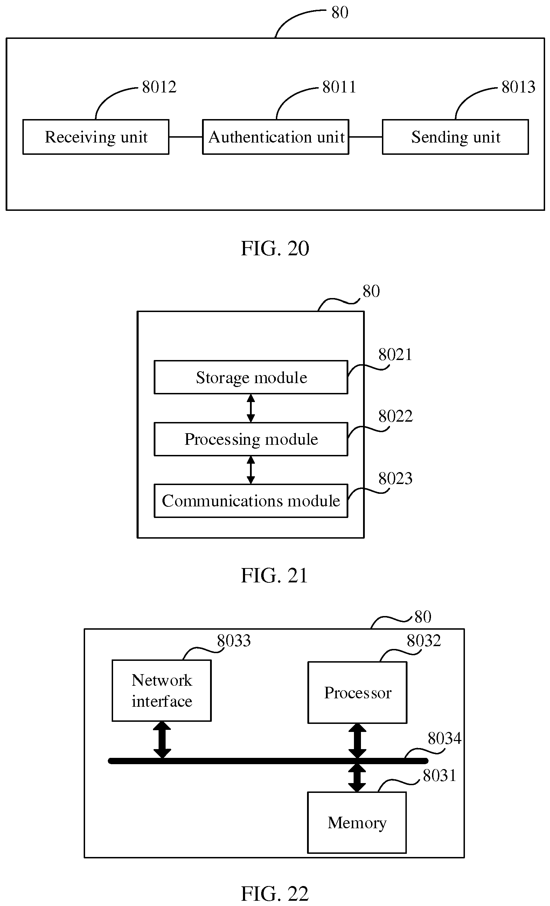

When function modules are obtained through division based on corresponding functions, FIG. 20 is a possible schematic structural diagram of the authentication service network element in the foregoing embodiment. An authentication service network element 80 includes an authentication unit 8011, a receiving unit 8012, and a sending unit 8013. The authentication unit 8011 is configured to support an access gateway network element in performing the process S005 in FIG. 2, the process S105 in FIG. 3, the process S1052 in FIG. 4, the process S105 in FIG. 5, the process S105 in FIG. 6, the process S105 in FIG. 7, the process S105 in FIG. 8, the processes S105 and S147 in FIG. 9, and the processes S101 and S158 in FIG. 10. The receiving unit 8012 is configured to support the access gateway network element in performing the process S005 in FIG. 2, the process S105 in FIG. 3, the process S105 in FIG. 4, the process S105 in FIG. 5, the process S105 in FIG. 6, the process S105 in FIG. 7, the process S105 in FIG. 8, the process S105 in FIG. 9, and the processes S105 and S153 in FIG. 10. The sending unit 8013 is configured to support the authentication service network element in performing the process S006 in FIG. 2, the process S106 in FIG. 3, the process S106 in FIG. 4, the process S106 in FIG. 5, the process S106 in FIG. 6, the process S106 in FIG. 7, the process S106 in FIG. 8, the process S106 in FIG. 9, and the processes S106 and S153 in FIG. 10. All related content of the steps in the foregoing method embodiments may be cited in function descriptions of corresponding function modules. Details are not described herein again.

When an integrated unit is used, FIG. 21 is a possible schematic structural diagram of the authentication service network element in the foregoing embodiment. The authentication service network element 80 includes a processing module 8022 and a communications module 8023. The processing module 8022 is configured to control and manage an action of the authentication service network element 80. For example, the processing module 8022 is configured to support the authentication service network element 80 in performing the process S005 in FIG. 2, the process S105 in FIG. 3, the process S1052 in FIG. 4, the process S105 in FIG. 5, the process S105 in FIG. 6, the process S105 in FIG. 7, the process S105 in FIG. 8, the processes S105 and S147 in FIG. 9, and the processes S101 and S158 in FIG. 10. The communications module 8023 is configured to support communication between the authentication service network element and another entity, for example, communication with a function module or a network entity shown in FIG. 1. The authentication service network element 80 may further include a storage module 8021, configured to store program code and data of the authentication service network element.

The processing module 8022 may be a processor or a controller, such as a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 8022 may implement or execute various example logical blocks, modules, and circuits described with reference to content disclosed in this application. Alternatively, the processor may be a combination for implementing a computing function, for example, a combination of one or more microprocessors or a combination of a DSP and a microprocessor. The communications module 8023 may be a transceiver, a transceiver circuit, a communications interface, or the like. The storage module 8021 may be a memory.

When the processing module 8022 is a processor, the communications module 8023 is a network interface, and the storage module 8021 is a memory, the authentication service network element in this embodiment of this application may be an authentication service network element described below.

Referring to FIG. 22, the authentication service network element 80 includes a processor 8032, a network interface 8033, a memory 8031, and a bus 8034. The network interface 8033, the processor 8032, and the memory 8031 are connected to each other by using the bus 8034. For functions of components in the access and authentication service network element 80, refer to function descriptions of corresponding components in the terminal 50 and the access gateway network element 60. Details are not described herein again.

It should be understood that in various embodiments of this application, sequence numbers of the foregoing processes do not mean execution sequences. The execution sequences of the processes should be determined based on functions and internal logic of the processes, and shall not constitute any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether these functions are executed by hardware or software depends on specific applications and design constraints of the technical solutions. A person skilled in the art may use different methods to implement the described functions for each particular application, but it should not be considered that such implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the devices or units may be implemented in electronic, mechanical, or other forms.

The units described as separate parts may or may not be physically separate. Parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for accessing a fixed network, comprising:
performing, by an access gateway network element of a fixed network, a point-to-point protocol over ethernet PPPoE negotiation with a terminal, to establish a PPPoE session with the terminal;
negotiating, by the access gateway network element, a PPPoE authentication mode;
sending, by the access gateway network element, a PPPoE authentication parameter to an authentication service network element of a mobile network, wherein the PPPoE authentication parameter is used by the authentication service network element to perform PPPoE authentication on the terminal; and
receiving, by the access gateway network element, a PPPoE authentication result from the authentication service network element, and sending a PPPoE authentication result message to the terminal, wherein the PPPoE authentication result message comprises the PPPoE authentication result.

2. The method according to claim 1, wherein
the sending, by the access gateway network element, a PPPoE authentication parameter to an authentication service network element of a mobile network comprises:
sending, by the access gateway network element, an attach request message to an access and mobility management network element, wherein the attach request message comprises the PPPoE authentication parameter, so that the access and mobility management network element sends the PPPoE authentication parameter to the authentication service network element by using an authentication request message; and
the receiving, by the access gateway network element, a PPPoE authentication result from the authentication service network element comprises:
receiving, by the access gateway network element, an attach accept message from the access and mobility management network element, wherein the attach accept message comprises the PPPoE authentication result, and the PPPoE authentication result is obtained by the access and mobility management network element from an authentication response message from the authentication service network element.

3. The method according to claim 2, wherein the attach request message and the authentication request message further comprise a fixed network access indication, and the fixed network access indication is used by the authentication service network element to determine to use a PPPoE authentication method; or the PPPoE authentication parameter is further used by the authentication service network element to determine to use the PPPoE authentication method.

4. The method according to claim 1, wherein before the receiving, by the access gateway network element, a PPPoE authentication result from the authentication service network element, the method further comprises:
receiving, by the access gateway network element, a security mode command SMC message from the access and mobility management network element;
sending, by the access gateway network element, a first point-to-point protocol PPP message to the terminal, wherein the first PPP message comprises the SMC message or a non-access stratum NAS encryption activation parameter;
receiving, by the access gateway network element, a second PPP message from the terminal, wherein the second PPP message comprises an SMC complete message or the NAS encryption activation parameter; and
sending, by the access gateway network element, the SMC complete message or the NAS encryption activation parameter to the access and mobility management network element.

5. The method according to claim 2, wherein the attach accept message further comprises an SMC message, the authentication response message further comprises the SMC message or a NAS encryption activation parameter, and the method further comprises:
receiving, by the access gateway network element, a first network control protocol NCP negotiation message from the terminal, wherein the first NCP negotiation message comprises an SMC complete message or the NAS encryption activation parameter; and
sending, by the access gateway network element, the SMC complete message to the access and mobility management network element.

6. The method according to claim 4 or 5, wherein the method further comprises:
sending, by the access gateway network element, a second NCP negotiation message to the terminal, wherein the second NCP negotiation message comprises a source Internet protocol IP address and a destination IP address that are used for transmission of a NAS message, or a source media access control MAC address and a destination MAC address that are used for transmission of the NAS message.

7. The method according to claim 1, wherein the method further comprises:
receiving, by the access gateway network element, a third NCP negotiation message from the terminal;
sending, by the access gateway network element, a packet data unit PDU session establishment request message to the access and mobility management network element, wherein the PDU session establishment request message comprises a user identifier and/or a fixed network access identifier;
receiving, by the access gateway network element, a session establishment response message from the access and mobility management network element, wherein the session establishment response message comprises a quality of service QoS and/or charging policy and an IP address that is used for transmission of a user plane data packet, and the QoS and/or charging policy is obtained by a session management network element based on the user identifier and/or the fixed network access identifier; and
sending, by the access gateway network element, a fourth NCP negotiation message to the terminal, wherein the fourth NCP negotiation message comprises the IP address that is used for transmission of the user plane data packet.

8. The method according to claim 1, wherein the method further comprises:
receiving, by the access gateway network element, a fifth NCP negotiation message from the terminal, wherein the fifth NCP negotiation message comprises an SMC request message;
sending, by the access gateway network element, the SMC request message to the access and mobility management network element;
receiving, by the access gateway network element, an SMC response message from the access and mobility management network element; and
sending, by the access gateway network element, a sixth NCP negotiation message to the terminal, wherein the sixth NCP negotiation message comprises the SMC response message.

9. The method according to claim 8, wherein the sixth NCP negotiation message further comprises a source IP address and a destination IP address that are used for transmission of a NAS message, or a source MAC address and a destination MAC address that are used for transmission of the NAS message.

10. The method according to claim 1, wherein the method further comprises:
receiving, by the access gateway network element, a seventh NCP negotiation message from the terminal;
sending, by the access gateway network element, an attach complete message to the access and mobility management network element;
receiving, by the access gateway network element, an SMC message from the access and mobility management network element;
sending, by the access gateway network element, an eighth NCP negotiation message to the terminal, wherein the eighth NCP negotiation message comprises the SMC message; and
receiving, by the access gateway network element, an SMC complete message from the terminal.

11. The method according to claim 10, wherein the receiving, by the access gateway network element, an SMC complete message from the terminal comprises:
receiving, by the access gateway network element, a user uplink data packet from the terminal, wherein the user uplink data packet comprises the SMC complete message; or
receiving, by the access gateway network element, a ninth NCP negotiation message from the terminal, wherein the ninth NCP negotiation message comprises the SMC complete message; or
when the eighth NCP negotiation message comprises a source IP address and a destination IP address that are used for transmission of a NAS message, or a source MAC address and a destination MAC address that are used for transmission of the NAS message, receiving, by the access gateway network element, the SMC complete message from the terminal, wherein the SMC complete message is transmitted by using the source IP address and the destination IP address that are used for transmission of the NAS message, or the source MAC address and the destination MAC address that are used for transmission of the NAS message.

12. The method according to any one of claims 1 to 11, wherein that the access gateway network element establishes and configures a link layer connection with the terminal to negotiate the authentication mode comprises:
receiving, by the access gateway network element, a link control protocol LCP negotiation message from the terminal, to determine to use a challenge handshake authentication protocol CHAP authentication process;
generating, by the access gateway network element, a first random number;
sending, by the access gateway network element, a challenge message to the terminal to initiate CHAP authentication, wherein the challenge request message comprises the first random number; and
receiving, by the access gateway network element, a challenge response message from the terminal, wherein the challenge response message comprises a first authentication token, and the first authentication token is generated by the terminal based on the first random number and a first authentication parameter; and
the method further comprises:
sending, by the access gateway network element, the first random number and the first authentication token to the authentication service network element, wherein the first random number and the first authentication token are used by the authentication service network element to authenticate the terminal;
receiving, by the access gateway network element, a second random number and a second authentication token from the authentication service network element, wherein the second authentication token is generated by the authentication service network element based on the first random number, the second random number, and a second authentication parameter; and
sending, by the access gateway network element, the second random number and the second authentication token to the terminal, wherein the second random number and the second authentication token are used by the terminal to authenticate a network side.

13. The method according to any one of claims 1 to 11, wherein that the access gateway network element establishes and configures a link layer connection with the terminal to negotiate the authentication mode comprises:
receiving, by the access gateway network element, an LCP negotiation message from the terminal, to determine to use a CHAP authentication process, wherein the LCP negotiation message comprises identity information of the terminal;
sending, by the access gateway network element, an authentication information request message to a unified data management network element, wherein the authentication information request message comprises the identity information of the terminal;
receiving, by the access gateway network element, an authentication information response message from the authentication service network element, wherein the authentication information response message comprises a third random number and a third authentication token, and the third random number and the third authentication token are generated by the unified data management network element based on the identity information of the terminal;
sending, by the access gateway network element, a challenge request message to the terminal to initiate CHAP authentication, wherein the challenge request message comprises the third random number and the third authentication token, and the third random number and the third authentication token are used by the terminal to authenticate a network side; and
receiving, by the access gateway network element, a challenge response message from the terminal, wherein the challenge response message comprises a fourth random number and a fourth authentication token, the fourth random number is generated by the terminal, and the fourth authentication token is generated by the terminal based on the third random number, the fourth random number, and a third authentication parameter; and
the method further comprises:
sending, by the access gateway network element, the fourth random number and the fourth authentication token to the authentication service network element, wherein the fourth random number and the fourth authentication token are used by the authentication service network element to authenticate the terminal.

14. The method according to any one of claims 1 to 13, wherein the access gateway network element comprises one of the following: an independent network element in an access network of a fixed network, an access network of a fixed network, a broadband network gateway BNG/broadband remote access server BRAS.

15. An access gateway network element of a fixed network, comprising:
a negotiation unit, configured to perform a point-to-point protocol over Ethernet PPPoE negotiation with a terminal, to establish a PPPoE session with the terminal, wherein
the negotiation unit is further configured to negotiate a PPPoE authentication mode with the terminal;
a sending unit, configured to send a PPPoE authentication parameter to an authentication service network element of a mobile network, wherein the PPPoE authentication parameter is used by the authentication service network element to perform PPPoE authentication on the terminal; and
a receiving unit, configured to: receive a PPPoE authentication result from the authentication service network element, and send a PPPoE authentication result message to the terminal, wherein the PPPoE authentication result message comprises the PPPoE authentication result.

16. The network element according to claim 15, wherein
the sending unit is specifically configured to send an attach request message to an access and mobility management network element, wherein the attach request message comprises the PPPoE authentication parameter, so that the access and mobility management network element sends the PPPoE authentication parameter to the authentication service network element by using an authentication request message; and
the receiving unit is specifically configured to receive an attach accept message from the access and mobility management network element, wherein the attach accept message comprises the PPPoE authentication result, and the PPPoE authentication result is obtained by the access and mobility management network element from an authentication response message from the authentication service network element.

17. The network element according to claim 16, wherein the attach request message and the authentication request message further comprise a fixed network access indication, and the fixed network access indication is used by the authentication service network element to determine to use a PPPoE authentication method; or the PPPoE authentication parameter is further used by the authentication service network element to determine to use the PPPoE authentication method.

18. The network element according to claim 15, wherein
the receiving unit is further configured to: before the receiving unit receives the PPPoE authentication result from the authentication service network element, receive a security mode command SMC message from the access and mobility management network element;
the sending unit is further configured to send a first point-to-point protocol PPP message to the terminal, wherein the first PPP message comprises the SMC message or a non-access stratum NAS encryption activation parameter;
the receiving unit is further configured to receive a second PPP message from the terminal, wherein the second PPP message comprises an SMC complete message or the NAS encryption activation parameter; and
the sending unit is further configured to send the SMC complete message or the NAS encryption activation parameter to the access and mobility management network element.

19. The network element according to claim 16, wherein the attach accept message further comprises an SMC message, and the authentication response message further comprises the SMC message or a NAS encryption activation parameter;
the receiving unit is further configured to receive a first network control protocol NCP negotiation message from the terminal, wherein the first NCP negotiation message comprises an SMC complete message or the NAS encryption activation parameter; and
the sending unit is further configured to send the SMC complete message to the access and mobility management network element.

20. The network element according to claim 18 or 19, wherein
the sending unit is further configured to send a second NCP negotiation message to the terminal, wherein the second NCP negotiation message comprises a source Internet protocol IP address and a destination IP address that are used for transmission of a NAS message, or a source media access control MAC address and a destination MAC address that are used for transmission of the NAS message.

21. The network element according to claim 15, wherein
the receiving unit is further configured to receive a third NCP negotiation message from the terminal;
the sending unit is further configured to send a packet data unit PDU session establishment request message to the access and mobility management network element, wherein the PDU session establishment request message comprises a user identifier and/or a fixed network access identifier;
the receiving unit is further configured to receive a session establishment response message from the access and mobility management network element, wherein the session establishment response message comprises a quality of service QoS and/or charging policy and an IP address that is used for transmission of a user plane data packet, and the QoS and/or charging policy is obtained by a session management network element based on the user identifier and/or the fixed network access identifier; and
the sending unit is further configured to send a fourth NCP negotiation message to the terminal, wherein the fourth NCP negotiation message comprises the IP address that is used for transmission of the user plane data packet.

22. The network element according to claim 15, wherein
the receiving unit is further configured to receive a fifth NCP negotiation message from the terminal, wherein the fifth NCP negotiation message comprises an SMC request message;
the sending unit is further configured to send the SMC request message to the access and mobility management network element;
the receiving unit is further configured to receive an SMC response message from the access and mobility management network element; and
the sending unit is further configured to send a sixth NCP negotiation message to the terminal, wherein the sixth NCP negotiation message comprises the SMC response message.

23. The network element according to claim 22, wherein the sixth NCP negotiation message further comprises a source IP address and a destination IP address that are used for transmission of a NAS message, or a source MAC address and a destination MAC address that are used for transmission of the NAS message.

24. The network element according to claim 15, wherein
the receiving unit is further configured to receive a seventh NCP negotiation message from the terminal;
the sending unit is further configured to send an attach complete message to the access and mobility management network element;
the receiving unit is further configured to receive an SMC message from the access and mobility management network element;
the sending unit is further configured to send an eighth NCP negotiation message to the terminal, wherein the eighth NCP negotiation message comprises the SMC message; and
the receiving unit is further configured to receive an SMC complete message from the terminal.

25. The network element according to claim 24, wherein the receiving unit is specifically configured to:
receive a user uplink data packet from the terminal, wherein the user uplink data packet comprises the SMC complete message; or
receive a ninth NCP negotiation message from the terminal, wherein the ninth NCP negotiation message comprises the SMC complete message; or
when the eighth NCP negotiation message comprises a source IP address and a destination IP address that are used for transmission of a NAS message, or a source MAC address and a destination MAC address that are used for transmission of the NAS message, receive the SMC complete message from the terminal, wherein the SMC complete message is transmitted by using the source IP address and the destination IP address that are used for transmission of the NAS message, or the source MAC address and the destination MAC address that are used for transmission of the NAS message.

26. The network element according to any one of claims 15 to 25, wherein
the receiving unit is further configured to receive a link control protocol LCP negotiation message from the terminal, to determine to use a challenge handshake authentication protocol CHAP authentication process;
the negotiation unit is specifically configured to generate a first random number;
the sending unit is further configured to send a challenge message to the terminal to initiate CHAP authentication, wherein the challenge request message comprises the first random number;
the receiving unit is further configured to receive a challenge response message from the terminal, wherein the challenge response message comprises a first authentication token, and the first authentication token is generated by the terminal based on the first random number and a first authentication parameter;
the sending unit is further configured to send the first random number and the first authentication token to the authentication service network element, wherein the first random number and the first authentication token are used by the authentication service network element to authenticate the terminal;
the receiving unit is further configured to receive a second random number and a second authentication token from the authentication service network element, wherein the second authentication token is generated by the authentication service network element based on the first random number, the second random number, and a second authentication parameter; and
the sending unit is further configured to send the second random number and the second authentication token to the terminal, wherein the second random number and the second authentication token are used by the terminal to authenticate a network side.

27. The network element according to any one of claims 15 to 25, wherein
the receiving unit is further configured to receive an LCP negotiation message from the terminal, to determine to use a CHAP authentication process, wherein the LCP negotiation message comprises identity information of the terminal;
the sending unit is further configured to send an authentication information request message to a unified data management network element, wherein the authentication information request message comprises the identity information of the terminal;
the receiving unit is further configured to receive an authentication information response message from the authentication service network element, wherein the authentication information response message comprises a third random number and a third authentication token, and the third random number and the third authentication token are generated by the unified data management network element based on the identity information of the terminal;
the sending unit is further configured to send a challenge request message to the terminal to initiate CHAP authentication, wherein the challenge request message comprises the third random number and the third authentication token, and the third random number and the third authentication token are used by the terminal to authenticate a network side;
the receiving unit is further configured to receive a challenge response message from the terminal, wherein the challenge response message comprises a fourth random number and a fourth authentication token, the fourth random number is generated by the terminal, and the fourth authentication token is generated by the terminal based on the third random number, the fourth random number, and a third authentication parameter; and
the sending unit is further configured to send the fourth random number and the fourth authentication token to the authentication service network element, wherein the fourth random number and the fourth authentication token are used by the authentication service network element to authenticate the terminal.

28. The network element according to any one of claims 15 to 27, wherein the access gateway network element comprises one of the following: an independent network element in an access network of a fixed network, an access network of a fixed network, a broadband network gateway BNG/broadband mobile access server BRAS.

29. An access gateway network element of a fixed network, comprising: a processor, a memory, a bus, and a communications interface, wherein the memory is configured to store a computer execution instruction, the processor is connected to the memory by using the bus, and when the network element runs, the processor executes the computer execution instruction stored in the memory, so that the network element performs the method according to any one of claims 1 to 14.

30. A computer storage medium, comprising an instruction, wherein when the instruction runs on a computer, the computer performs the method according to any one of claims 1 to 14.
